# EUROPEAN PATENT APPLICATION

(11) **EP 4 400 544 A1**
(43) Date of publication of application: **17.07.2024**
(21) Application number: 22864751.7
(22) Date of filing: 05.09.2022
(51) Int. Cl.: C08L 67/00, C08K 3/04, C08K 3/40, C08K 13/04

(54) **LIQUID CRYSTAL POLYESTER RESIN PELLET AND MOLDED PRODUCT**

(30) Priority: 06.09.2021 JP 2021144888
(71) Applicant: Sumitomo Chemical Company, Limited, Tokyo 103-6020 (JP)
(72) Inventor: TAMURA Tasuku, Chiba-shi, Chiba 260-0822 (JP); SUGIYAMA Takayuki, Tsukuba-shi, Ibaraki 300-3294 (JP)
(74) Representative: Vossius & Partner Patentanwälte Rechtsanwälte mbB
(86) International application number: PCT/JP2022/033243
(87) International publication number: WO 2023/033169

(57) **Abstract**

There is provided a liquid crystal polyester resin pellet containing a liquid crystal polyester resin (A) and a fibrous filler (B), in which the length-weighted average fiber length of the fibrous filler (B) is 5 mm or more and less than 50 mm, the pellet length of the liquid crystal polyester resin pellet and the length-weighted average fiber length of the fibrous filler (B) are substantially the same, and a ratio D1/D2 of a major axis D1 to a minor axis D2 of a cross section of the liquid crystal polyester resin pellet is 2.0 or more and 100 or less.

## Description

### [Technical Field]

The present invention relates to a liquid crystal polyester resin pellet and a molded article produced by using the liquid crystal polyester resin pellet.

Priority is claimed on Japanese Patent Application No. 2021-144888, filed on September 6, 2021, the content of which is incorporated herein by reference.

### [Background Art]

A liquid crystal polyester resin is generally referred to as a molten liquid crystal type (thermotropic liquid crystal) polymer. Due to the unique behavior, the liquid crystal polyester resin has extremely excellent melt fluidity and has a thermal deformation resistance of 300°C or higher depending on the structure thereof.

The liquid crystal polyester resin is used in molded articles for use applications such as, including electronic components, automobile components, OA components, and heat-resistant tableware, by utilizing high fluidity, high heat resistance, and high dimensional accuracy thereof.

Due to having a structure in which molecules are regularly arranged, the liquid crystal polyester resin has anisotropy in mechanical strength. Therefore, a molded article produced by using the liquid crystal polyester resin composition also has anisotropy in mechanical strength. For example, a molded article produced by using a liquid crystal polyester resin may have a difference between a mechanical strength in an MD direction (a flow direction) and a mechanical strength in a TD direction (a direction orthogonal to the flow direction).

Conventionally, various studies have been made to achieve an improvement of anisotropy of mechanical strength of a molded article that is molded from a liquid crystal polyester resin composition. Specifically, studies have been carried out to disturb the orientation of the liquid crystal polyester resin and relax the anisotropy by incorporating a fibrous filler.

For example, Patent Document 1 discloses a liquid crystal polyester resin pellet containing a thermoplastic resin including a liquid crystal polyester; and a fibrous filler, where the liquid crystal polyester resin pellet contains the fibrous filler such that an amount thereof is 1 part by mass or more and less than 120 parts by mass with respect to 100 parts by mass of the thermoplastic resin, and the length-weighted average fiber length of the fibrous filler is 4 mm or larger and smaller than 50 mm.

It is disclosed that according to this liquid crystal polyester resin pellet, it is possible to reduce the difference in Charpy impact strength between a test piece that does not have a notch (that is, a cutout) and a test piece that has a notch.

### [Citation List]

### [Patent Document]

[Patent Document 1]
Japanese Unexamined Patent Application, First Publication No. 2021-28373

### [Summary of Invention]

### [Technical Problem]

Examples of the method for molding the liquid crystal polyester resin composition include injection molding, blow molding, vacuum molding, and press molding, and the molding method is appropriately selected depending on the use application and the requirement.

In recent years, in the field of transportation equipment including automobiles and aircraft, the use of molded articles formed of liquid crystal polyester resins has been underway. For use application to such fields, liquid crystal polyester resin pellets that make it possible to produce a molded article having small variations in physical properties are required.

For example, in injection molding (extrusion molding), an injection-molded article in which anisotropy of mechanical strength is suppressed is required. In addition, in press molding (compression molding), a press-molded article in which a variation in the mechanical strength between press-molded articles is suppressed is required.

In addition, in recent years, hybrid molding or the like in which injection molding and press molding are combined has also been proposed, and molded articles molded by combining injection molding and press molding are also being studied.

Therefore, there is also a demand for resin pellets that are optimized for use in both injection molding and press molding while variations in physical properties thereof are suppressed.

However, the liquid crystal polyester resin pellet conventionally which is described in Patent Document 1 is not sufficient with respect to the required level. In addition, the molding method may be limited.

In addition, when hybrid molding is carried out using the liquid crystal polyester resin pellet conventionally which is described in Patent Document 1, there may be a case where the mechanical strength is decreased at an interface between a portion produced by the injection molding and a portion produced by the press molding. In particular, regarding a liquid crystal polyester resin, which is inferior to other thermoplastic resins in adhesiveness and adherence, a decrease in mechanical strength at the interface becomes a problem, and furthermore, variations in physical properties tend to cause a large problem.

The present invention has been made in consideration of the above circumstances, and an object of the present invention is to provide liquid crystal polyester resin pellets, which make it possible to produce a molded article having small variations in physical properties, in any case of being used for injection molding or press molding.

### [Solution to Problem]

In order to achieve the above-described object, the present invention employs the following configurations.
[1] A liquid crystal polyester resin pellet containing:
   a liquid crystal polyester resin (A); and
   a fibrous filler (B),
   in which the length-weighted average fiber length of the fibrous filler (B) is 5 mm or more and less than 50 mm,
   the pellet length of the liquid crystal polyester resin pellet and the length-weighted average fiber length of the fibrous filler (B) are substantially the same, and
   a ratio D1/D2 of a major axis D1 to a minor axis D2 of a cross section of the liquid crystal polyester resin pellet is 2.0 or more and 100 or less.
[2] The liquid crystal polyester resin pellet according to [1], in which the major axis D1 is 4.1 mm or more and 24 mm or less.
[3] The liquid crystal polyester resin pellet according to [1] or [2], in which the minor axis D2 is 0.25 mm or more and 1.4 mm or less.
[4] The liquid crystal polyester resin pellet according to any one of [1] to [3], in which the fibrous filler (B) includes a carbon fiber or a glass fiber.
[5] The liquid crystal polyester resin pellet according to any one of Claims [1] to [4], in which the number of fibers of the fibrous filler (B) is 3,000 or more and 60,000 or less.
[6] A molded article produced by using the liquid crystal polyester resin pellet according to any one of [1] to [5].
[7] The molded article according to [6], in which the length-weighted average fiber length of the fibrous filler (B) in the molded article is 1 mm or more and less than 50 mm.

### [Advantageous Effects of Invention]

According to the present invention, it is possible to provide liquid crystal polyester resin pellets, which make it possible to produce a molded article having small variations in physical properties, in any case of being used for injection molding (extrusion molding) or press molding (compression molding).

### [Brief Description of Drawings]

FIG. 1 is a schematic view showing an example of a liquid crystal polyester resin pellet according to the present embodiment.
FIG. 2 is a microscopic image of a cross section of the liquid crystal polyester resin pellet according to the present embodiment.
FIG. 3 is a view in which a major axis D1 and a minor axis D2 of a cross section of the liquid crystal polyester resin pellet according to the present embodiment are measured by image analysis software.
FIG. 4 is a schematic view showing an example of a producing apparatus of the liquid crystal polyester resin pellet according to the present embodiment.
FIG. 5 is a schematic view showing an example of a shaping roll in the producing apparatus of the liquid crystal polyester resin pellet according to the present embodiment.
FIG. 6 is a schematic view showing an example of a tire wheel disk according to the present embodiment.

### [Description of Embodiments]

### (Liquid crystal polyester resin pellet)

A liquid crystal polyester resin pellet according to the present embodiment contains a liquid crystal polyester resin (A) and a fibrous filler (B).

The length-weighted average fiber length of the fibrous filler (B) is 5 mm or more and less than 50 mm, and the pellet length of the liquid crystal polyester resin pellet and the length-weighted average fiber length of the fibrous filler (B) are substantially the same.

A ratio D1/D2 of a major axis D1 to a minor axis D2 of a cross section of the liquid crystal polyester resin pellet is 2.0 or more and 100 or less.

In the present specification, the phrase "the pellet length of the liquid crystal polyester resin pellet and the length-weighted average fiber length of the fibrous filler (B) are substantially the same" means that the length-weighted average fiber length of the fibrous filler (B) arranged in the resin pellet is 95% to 105% of the length of the resin pellet in the longitudinal direction.

Because the liquid crystal polyester resin pellet according to the present embodiment are typically produced according to a production method described later, the pellet length of the liquid crystal polyester resin pellet and the length-weighted average fiber length of the fibrous filler (B) are to be substantially the same.

The shape of the liquid crystal polyester resin pellet according to the present embodiment is, for example, an elliptical column shape or a flat elliptical column shape.

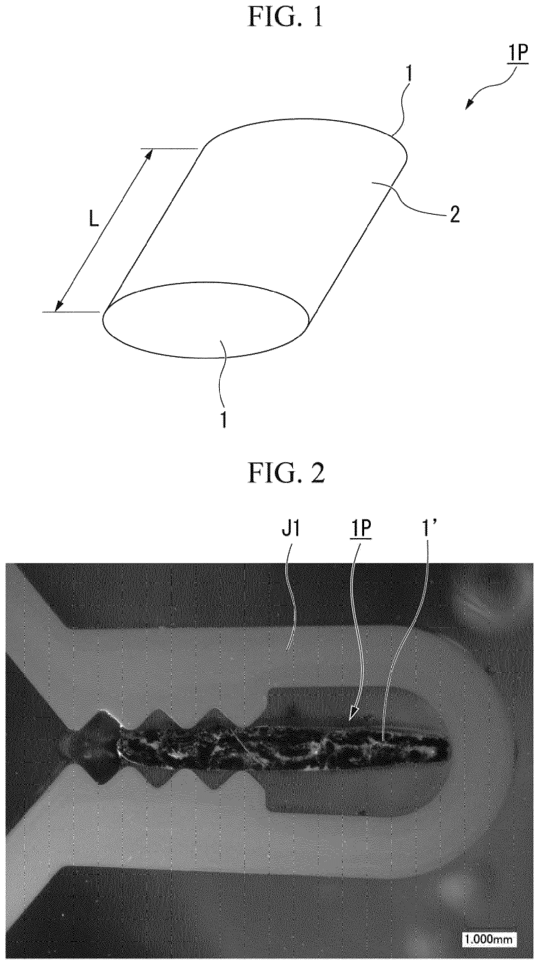

FIG. 1 is a schematic view showing a liquid crystal polyester resin pellet 1P, which is an example of the liquid crystal polyester resin pellet according to the present embodiment.

The liquid crystal polyester resin pellet 1P is a flat elliptical column-shaped pellet and has an end surface 1 and an outer circumferential surface 2.

The pellet length L of the liquid crystal polyester resin pellet 1P means a length of the liquid crystal polyester resin pellet 1P (a distance between both end surfaces 1) in the longitudinal direction.

In the liquid crystal polyester resin pellet according to the present embodiment, the ratio D1/D2 of a major axis D1 to a minor axis D2 of a cross section of the liquid crystal polyester resin pellet is 2.0 or more and 100 or less.

In the present specification, the term "the end surface of the liquid crystal polyester resin pellet" means a cut surface in a case of producing the liquid crystal polyester resin pellet.

Specifically, as described later, the liquid crystal polyester resin pellet according to the present embodiment is obtained by picking up, in a strand shape, a resin structural body containing the liquid crystal polyester resin (A) and the fibrous filler (B), and cutting the resin structural body to a predetermined length in the longitudinal direction to be pelletized. In the corresponding step, a cut surface generated when the strand-shaped resin structural body is cut to a predetermined length in the longitudinal direction is "the end surface of the liquid crystal polyester resin pellet".

In the present specification, the term "the cross section of the liquid crystal polyester resin pellet" means a cross section (polished surface) that is generated by polishing "the end surface of the liquid crystal polyester resin pellet" described above to a length of 1/2 of the pellet length of the liquid crystal polyester resin pellet according to procedures (iii) and (iv) in [Method for measuring major axis D1 and minor axis D2 of cross section of liquid crystal polyester resin pellet], which will be described later.

In the present specification, the major axis D1 and the minor axis D2 of the cross section of the liquid crystal polyester resin pellet each mean a Feret's diameter (projection width) and can be measured according to the following method.

### [Measurement of major axis D1 and minor axis D2 of cross section of resin pellet]

Procedure (i): The liquid crystal polyester resin pellet 1P is placed in a columnar mold that is sufficiently larger than the liquid crystal polyester resin pellet 1P, and using a fixing jig J1 (Holding blue clips (plastic), manufactured by PRESI Co., Ltd.) as shown in FIG. 2, the liquid crystal polyester resin pellet 1P is erected to be fixed so that the length direction thereof could be perpendicular to the bottom surface of the mold.

Procedure (ii): A solution obtained by adding a Cold-Mounting Resin No. 105 (manufactured by Struers) and an M agent (curing agent) for the No. 105 (manufactured by Struers) at a ratio of 100:2 is poured into the columnar mold. Next, it is allowed to stand at room temperature (23°C) for 1 day or longer to be sufficiently solidified.

Procedure (iii): The solidified columnar sample is taken out from the mold, and using a polishing machine (APO-128, Automax Polisher EV, manufactured by Refine Tec Ltd.), the solidified columnar sample is polished such that the pellet length of the liquid crystal polyester resin pellet 1P is a length of 1/2 of the length thereof.

Procedure (iv): A suede cloth No. 52-308 (manufactured by Refine Tec Ltd.) is spread for the polishing machine, and the surface polished to a length of 1/2 is polished with water containing an alumina powder (Alumina Powder A, manufactured by Refine Tec Ltd.) until the surface is flat and polishing scratches disappear. In this way, a cross section 1' of the resin pellets is formed.

Procedure (v): The cross section 1' of the resin pellets is imaged using a microscope (main body: VHX-8000, lens: VH-Z00R, manufactured by KEYENCE CORPORATION) at a magnification of 10 to 25 times.

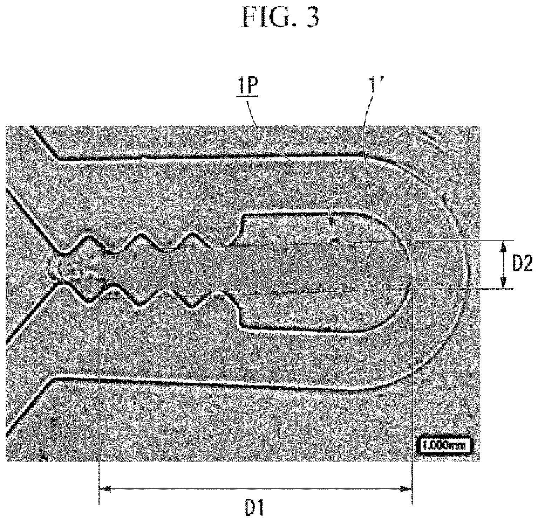

Procedure (vi): As shown in FIG. 3, the captured image is subjected to binarization processing with image processing software (WinRooF2018, manufactured by MITANI CORPORATION), the Feret's diameter is calculated using Feret II from the measurement tool, and the Feret horizontal is defined as the major axis D1 of the cross section of the liquid crystal polyester resin pellet 1P, and the Feret vertical is defined as the minor axis D2 of the cross section of the liquid crystal polyester resin pellet 1P.

Procedure (Vii): Five resin pellets are subjected to the procedures (i) to (Vi), and the average values obtained from five times of measurements are adopted as the values of the major axis D1 and the minor axis D2 of the cross section of the resin pellet.

In the present measurement, for the major axis D1 and the minor axis D2 described above, the major axis D1 and the minor axis D2 are calculated not for the end surface 1 of the resin pellet but for the cross section 1' of the resin pellet. In general, the major axis D1 and the minor axis D2 of the end surface 1 of the resin pellets and the major axis D1 and the minor axis D2 of the cross section 1' of the resin pellet are almost the same diameters. However, in order to further reduce the influence of variations in producing, the major axis D1 and the minor axis D2 of the cross section 1' of the resin pellets are adopted.

The lower limit value of D1/D2 of the cross section of the liquid crystal polyester resin pellet according to the present embodiment is 2.0, and it is preferably 2.5 or more and more preferably 2.8 or more.

The upper limit value of D1/D2 is 100, and it is preferably 80 or less, more preferably 50 or less, still more preferably 20 or less, and particularly preferably 15 or less.

For example, D1/D2 of the cross section of the liquid crystal polyester resin pellet according to the present embodiment is preferably 2.5 or more and 80 or less, more preferably 2.8 or more and 50 or less, still more preferably 2.8 or more and 20 or less, and particularly preferably 2.8 or more and 15 or less.

When D1/D2 of the cross section of the liquid crystal polyester resin pellet according to the present embodiment is 2.0 or more and 100 or less, it is possible to produce a molded article having small variations in physical properties in a case of using the liquid crystal polyester resin pellet, in any molding method of injection molding (extrusion molding) or press molding (compression molding), and thus the selectivity of the processing method at the producing site is improved.

When the D1/D2 is within the preferred range described above, it is possible to produce a molded article having smaller variations in physical properties.

The lower limit value of the major axis I71 of the cross section of the liquid crystal polyester resin pellet according to the present embodiment is preferably 1 mm or more, more preferably 1.5 mm or more, still more preferably 2 mm or more, and particularly preferably 4.1 mm or more.

The upper limit value of the major axis D1 of the cross section of the liquid crystal polyester resin pellet according to the present embodiment is preferably 24 mm or less, more preferably 20 mm or less, still more preferably 15 mm or less, and particularly preferably 12 mm or less.

For example, the major axis D1 of the cross section of the liquid crystal polyester resin pellet according to the present embodiment is preferably 1 mm or more and 24 mm or less, more preferably 1.5 mm or more and 20 mm or less, still more preferably 2 mm or more and 15 mm or less, and particularly preferably 4.1 mm or more and 12 mm or less, and it may be 4.1 mm or more and 24 mm or less.

The lower limit value of the minor axis D2 of the cross section of the liquid crystal polyester resin pellet according to the present embodiment is preferably 0.1 mm or more, more preferably 0.15 mm or more, still more preferably 0.2 mm or more, and particularly preferably 0.25 mm or more.

The upper limit value of the minor axis D2 of the cross section of the liquid crystal polyester resin pellet according to the present embodiment is preferably 5 mm or less, more preferably 3 mm or less, still more preferably 2.5 mm or less, and particularly preferably 1.4 mm or less.

For example, the minor axis D2 of the cross section of the liquid crystal polyester resin pellet according to the present embodiment is preferably 0.1 mm or more and 5 mm or less, more preferably 0.15 mm or more and 3 mm or less, still more preferably 0.2 mm or more and 2.5 mm or less, and particularly preferably 0.25 mm or more and 1.4 mm or less.

In the liquid crystal polyester resin pellet according to the present embodiment, the major axis D1 of the cross section of the liquid crystal polyester resin pellet is preferably 1 mm or more and 24 mm or less, more preferably 1.5 mm or more and 20 mm or less, still more preferably 2 mm or more and 15 mm or less, and particularly preferably 4.1 mm or more and 12 mm or less, and it may be 4.1 mm or more and 24 mm or less.

The minor axis D2 of the cross section of the liquid crystal polyester resin pellet is preferably 0.1 mm or more and 5 mm or less, more preferably 0.15 mm or more and 3 mm or less, still more preferably 0.2 mm or more and 2.5 mm or less, and particularly preferably 0.25 mm or more and 1.4 mm or less, and

D1/D2 of the cross section of the liquid crystal polyester resin pellet is 2.0 or more and 100 or less, and it is preferably 2.5 or more and 80 or less, more preferably 2.8 or more and 50 or less, still more preferably 2.8 or more and 20 or less, and particularly preferably 2.8 or more and 15 or less.

When the major axis D1 and the minor axis D2 of the cross section of the liquid crystal polyester resin pellet according to the present embodiment are within the preferred range described above, and D1/D2 is within the range described above, it is possible to produce a molded article having smaller variations in physical properties in a case of using the liquid crystal polyester resin pellet, in any molding method of injection molding (extrusion molding) or press molding (compression molding), and thus the selectivity of the processing method at the producing site is further improved.

The pellet length of the liquid crystal polyester resin pellet according to the present embodiment is preferably 5 mm or more and less than 50 mm, more preferably 5 mm or more and 45 mm or less, and still more preferably 5 mm or more and 40 mm or less.

The pellet length can be measured using a caliper or an optical microscope.

The pellet length means the length of the liquid crystal polyester resin pellet according to the present embodiment (a distance between both end surfaces) in the longitudinal direction.

### <Liquid crystal polyester resin (A)>

The liquid crystal polyester resin (A) contained in the liquid crystal polyester resin pellet according to the present embodiment is not particularly limited as long as it is a polyester resin that exhibits liquid crystallinity in a melted state. The liquid crystal polyester resin (A) according to the present embodiment may be a liquid crystal polyester amide, a liquid crystal polyester ether, a liquid crystal polyester carbonate, a liquid crystal polyester imide, or the like.

The flow starting temperature of the liquid crystal polyester resin (A) according to the present embodiment is preferably 250°C or higher, more preferably 270°C or higher, and still more preferably 280°C or higher.

In addition, the flow starting temperature of the liquid crystal polyester resin (A) according to the present embodiment is preferably 400°C or lower, more preferably 360°C or lower, and still more preferably 330°C or lower.

For example, the flow starting temperature of the liquid crystal polyester resin (A) according to the present embodiment is preferably 250°C or higher and 400°C or lower, more preferably 270°C or higher and 360°C or lower, and still more preferably 280°C or higher and 330°C or lower.

In the present specification, the flow starting temperature is also referred to as a flow temperature, and it is a temperature that serves as an indication for the molecular weight of the liquid crystal polyester resin (A) (see "Liquid Crystal Polymer, - Synthesis, Molding, and Application -", edited by Naoyuki Koide, CMC Publishing Co., Ltd., June 5, 1987, p.95).

The flow starting temperature is a temperature at which a viscosity of 4,800 Pa-s (48,000 poises) is exhibited, in a case of using a method of measuring the flow starting temperature, in which specifically, a capillary rheometer is used, and the liquid crystal polyester resin (A) is melted while raising the temperature at a rate of 4°C/min under a load of 9.8 MPa (100 kg/cm²) and pushed out from a nozzle having an inner diameter of 1 mm and a length of 10 mm.

It is preferable that the liquid crystal polyester resin (A) according to the present embodiment is a fully aromatic liquid crystal polyester that is obtained in a case of using only an aromatic compound as a raw material monomer.

Typical examples of the liquid crystal polyester resin (A) according to the present embodiment include a liquid crystal polyester resin obtained by polymerization (polycondensation) of an aromatic hydroxycarboxylic acid, an aromatic dicarboxylic acid, and at least one compound selected from the group consisting of an aromatic diol, an aromatic hydroxyamine, and an aromatic diamine; a liquid crystal polyester resin obtained by polymerization of a plurality of kinds of aromatic hydroxycarboxylic acids; a liquid crystal polyester resin obtained by polymerization of an aromatic dicarboxylic acid and at least one compound selected from the group consisting of an aromatic diol, an aromatic hydroxyamine, and an aromatic diamine; and a liquid crystal polyester resin obtained by polymerization of a polyester such as polyethylene terephthalate, and an aromatic hydroxycarboxylic acid.

Here, the aromatic hydroxycarboxylic acid, the aromatic dicarboxylic acid, the aromatic diol, the aromatic hydroxyamine, and the aromatic diamine may be each independently such that a part or whole thereof is replaced with a polymerizable derivative thereof, thereby being used.

Examples of the polymerizable derivatives of compounds having a carboxyl group, such as an aromatic hydroxycarboxylic acid and an aromatic dicarboxylic acid, include esters obtained by converting a carboxyl group to an alkoxycarbonyl group or an aryloxycarbonyl group; acid halides obtained by converting a carboxyl group to a haloformyl group; and acid anhydrides obtained by converting a carboxyl group to an acyloxycarbonyl group.

Examples of the polymerizable derivatives of compounds having a hydroxyl group, such as an aromatic hydroxycarboxylic acid, an aromatic diol, and an aromatic hydroxyamine, include acylated substances obtained by acylating a hydroxyl group to be converted to an acyloxyl group.

Examples of the polymerizable derivatives of compounds having an amino group, such as an aromatic hydroxyamine and an aromatic diamine, include acylated substances obtained by acylating an amino group to be converted to an acylamino group.

The liquid crystal polyester resin (A) according to the present embodiment preferably has a repeating unit represented by Formula (1) (hereinafter, also referred to as "repeating unit (1)"), and it more preferably has the repeating unit (1), a repeating unit represented by Formula (2) (hereinafter, also referred to as "repeating unit (2)"), and a repeating unit represented by Formula (3) (hereinafter, also referred to as "repeating unit (3)").

(1) -O-Ar¹-CO-

(2) -CO-Ar²-CO-

(3) -X-Ar³-Y-

[In the formula, Ar¹ represents a phenylene group, a naphthylene group, or a biphenylylene group. Ar² and Ar³ each independently represent a phenylene group, a naphthylene group, a biphenylylene group, or a group represented by the following formula (4). X and Y each independently represent an oxygen atom or an imino group (-NH-). Hydrogen atoms that are present in the group represented by Ar¹, Ar², or Ar³ may be each independently substituted with a halogen atom, an alkyl group, or an aryl group.]

(4) -Ar⁴-Z-Ar⁵-

[In the formula, Ar⁴ and Ar⁵ each independently represent a phenylene group or a naphthylene group. Z represents an oxygen atom, a sulfur atom, a carbonyl group, a sulfonyl group, or an alkylidene group.]

Examples of the halogen atom that is capable of being substituted for one or more hydrogen atoms in the group represented by Ar¹, Ar², or Ar³ include a fluorine atom, a chlorine atom, a bromine atom, and an iodine atom.

Examples of the alkyl group that is capable of being substituted for one or more hydrogen atoms in the group represented by Ar¹, Ar², or Ar³ include a methyl group, an ethyl group, an n-propyl group, an isopropyl group, an n-butyl group, an isobutyl group, an s-butyl group, a t-butyl group, an n-hexyl group, a 2-ethylhexyl group, an n-octyl group, and an n-decyl group, where the number of carbon atoms of the alkyl group is preferably 1 to 10.

Examples of the aryl group that is capable of being substituted for one or more hydrogen atoms in the group represented by Ar¹, Ar², or Ar³ include a phenyl group, an o-tolyl group, an m-tolyl group, a p-tolyl group, a 1-naphthyl group, and a 2-naphthyl group, where the number of carbon atoms of the aryl group is preferably 6 to 20.

When the hydrogen atoms in the group represented by Ar¹, Ar², or Ar³ are substituted with the group described above, the number of substitutions is preferably one or two and more preferably one.

Examples of the alkylidene group as Z in Formula (4) include a methylene group, an ethylidene group, an isopropylidene group, an n-butylidene group, and a 2-ethylhexylidene group, where the number of carbon atoms thereof is preferably 1 to 10.

The repeating unit (1) is a repeating unit derived from a predetermined aromatic hydroxycarboxylic acid. The repeating unit (1) is preferably a repeating unit in which Ar¹ is a 1,4-phenylene group (a repeating unit derived from p-hydroxybenzoic acid) and a repeating unit in which Ar¹ is a 2,6-naphthylene group (a repeating unit derived from 6-hydroxy-2-naphthoic acid).

In the present specification, the term "derived" means that a chemical structure of a functional group that contributes to polymerization changes due to the polymerization of the raw material monomer, and no other structural change occurs.

The repeating unit (2) is a repeating unit derived from a predetermined aromatic dicarboxylic acid. The repeating unit (2) is preferably a repeating unit in which Ar² is a 1,4-phenylene group (a repeating unit derived from terephthalic acid), a repeating unit in which Ar² is a 1,3-phenylene group (a repeating unit derived from isophthalic acid), a repeating unit in which Ar² is a 2,6-naphthylene group (a repeating unit derived from 2,6-naphthalenedicarboxylic acid), and a repeating unit in which Ar² is a diphenylether-4,4'-diyl group (a repeating unit derived from a diphenylether-4,4'-dicarboxylic acid), and it is more preferably a repeating unit in which Ar² is a 1,4-phenylene group, a repeating unit in which Ar² is a 1 ,3-phenylene group, and a repeating unit in which Ar² is a 2,6-naphthylene group.

The repeating unit (3) is a repeating unit derived from a predetermined aromatic diol, aromatic hydroxylamine, or aromatic diamine. The repeating unit (3) is preferably a repeating unit in which Ar³ is a 1,4-plienylene group (a repeating unit derived from hydroquinone, p-aminophenol, or p-phenylenediamine) and a repeating unit in which Ar³ is a 4,4'-biphenylylene group (a repeating unit derived from 4,4'-dihydroxybiphenyl, 4-amino-4'-hydroxybiphenyl, or 4,4'-diaminobiphenyl).

The number of the repeating units (1) is preferably 30% or more and 80% or less, more preferably 40% or more and 70% or less, and still more preferably 45% or more and 70% or less, with respect to the total number (100%) of all the repeating units.

The number of the repeating units (2) is preferably 35% or less, more preferably 10% or more and 35% or less, and still more preferably 15% or more and 30% or less, with respect to the total number (100%) of all the repeating units.

The number of the repeating units (3) is preferably 35% or less, more preferably 10% or more and 35% or less, and still more preferably 15% or more and 30% or less, with respect to the total number (100%) of all the repeating units.

The ratio of the number of the repeating units (2) to the number of the repeating units (3), which is represented by [the number of the repeating units (2)]/[the number of the repeating units (3)], is preferably 0.9/1 to 1/0.9, more preferably 0.95/1 to 1/0.95, and still more preferably 0.98/1 to 1/0.98.

The liquid crystal polyester resin (A) according to the present embodiment may have two or more kinds of each of repeating units (1) to (3). In addition, the liquid crystal polyester resin (A) may have a repeating unit other than the repeating units (1) to (3); however, the number thereof is preferably 10% or less and more preferably 5% or less with respect to the total number (100%) of all the repeating units.

In the present specification, the number of each of repeating units (the degree of polymerization of each of repeating units) means a value that is determined according to the analysis method described in Japanese Unexamined Patent Application, First Publication No. 2000-19168.

Specifically, the liquid crystal polyester resin (A) is reacted with a lower alcohol (alcohol having 1 to 3 carbon atoms) in a supercritical state to depolymerize the liquid crystal polyester resin (A) to monomers from which the repeating units thereof are derived, and the monomer from which each of the repeating units obtained as the depolymerization product is derived is quantified by liquid chromatography, whereby the number of each of the repeating units can be calculated.

For example, when the liquid crystal polyester resin consists of the repeating units (1) to (3), the number of the repeating units (1) can be calculated by calculating, by liquid chromatography, the molar concentration of the monomer from which each of the repeating units (1) to (3) are derived, and calculating the ratio of the molar concentration of the monomer from which the repeating unit (1) is derived, when the total of the molar concentrations of the monomers from which the repeating units (1) to (3) are each derived is set to 100%.

The liquid crystal polyester resin (A) according to the present embodiment is preferable to have, as the repeating unit (3), a repeating unit in which X and Y are each an oxygen atom, that is, preferable to have a repeating unit derived from a predetermined aromatic diol, because the melt viscosity is easily decreased. It is more preferable to have only a repeating unit in which X and Y are each an oxygen atom, as the repeating unit (3).

One kind of the liquid crystal polyester resin (A) according to the present embodiment may be used alone, or two or more kinds thereof may be used in combination.

The amount of the liquid crystal polyester resin (A) is preferably 40% by mass or more, more preferably 45% by mass or more, and still more preferably 50% by mass or more, with respect to 100% by mass of the total amount of the liquid crystal polyester resin pellets.

In addition, the amount of the liquid crystal polyester resin (A) is preferably 90% by mass or less, more preferably 85% by mass or less, and still more preferably 80% by mass or less, with respect to 100% by mass of the total amount of the liquid crystal polyester resin pellets.

For example, the amount of the liquid crystal polyester resin (A) is preferably 40% by mass or more and 90% by mass or less, more preferably 45% by mass or more and 85% by mass or less, and still more preferably 50% by mass or more and 80% by mass or less, with respect to 1 00% by mass of the total amount of the liquid crystal polyester resin pellets.

### <Fibrous filler (B)>

The fibrous filler (B) contained in the liquid crystal polyester resin pellet according to the present embodiment has the length-weighted average fiber length of 5 mm or more and less than 50 mm.

In the present specification, the "length-weighted average fiber length" in the liquid crystal polyester resin pellet can be measured according to the following method.

### [Measurement of length-weighted average fiber length of fibrous filler (B) in resin pellet]

Procedure (1): 5 g of resin pellets are heated in a muffle furnace to remove a resin content.

The heating conditions are appropriately selected according to the kind of the fibrous filler (B). For example, the fibrous filler (B) is heated at 500°C for 3 hours in a case of being carbon fibers, and it is heated at 600°C for 4 hours in a case of being glass fibers.

Procedure (2): The resin content is removed from the resin pellets to obtain only the fibrous filler (B), which is subsequently dispersed in 1,000 mL of an aqueous solution containing 0.05% by volume of a surfactant (Micro 90, manufactured by INTERNATIONAL PRODUCTS CORPORATION) to prepare a fibrous filler dispersion liquid.

Procedure (3): 100 mL is extracted from the fibrous filler dispersion liquid and diluted to 10 times with pure water. 50 mL is extracted from the dispersion liquid after dilution and dispersed in a petri dish. Subsequently, the fibrous filler (B) dispersed in the petri dish is observed with a microscope (main body: VHX-8000, lens: VH-Z00R, manufactured by KEYENCE CORPORATION, magnification: 10 times), and five images per sample are captured without overlaps of taken areas. However, when the fibrous filler (B) is carbon fibers, 50 mL is extracted from the dispersion liquid after dilution and then filtered under reduced pressure using a Φ90 mm Kiriyama funnel filter paper (No. 5C), and images of the carbon fibers dispersed on the filter paper are captured.

Procedure (4): The lengths of all of the fibrous fillers (B) present in one captured image are measured with a measurement tool of the microscope. The bent fibrous filler (B) is subjected to measurement according to the multi-point measurement. The five captured images are sequentially subjected to the same operation until the total number of the fibrous fillers (B) measured is more than 500, and the fiber length of the fibrous filler (B) is measured.

Procedure (5): From the fiber lengths of the fibrous fillers (B) measured in Procedure (4), the length-weighted average fiber length 1m = (Σli² × ni)/(Σli × ni) is determined (Σni > 500).
li: Fiber length of fibrous filler (B)
ni: Number of fibrous fillers (B) having fiber length li

The length-weighted average fiber length of the fibrous filler (B) is 5 mm or more and less than 50 mm, preferably 5 mm or more and 45 mm or less, and more preferably 5 mm or more and 40 mm or less.

When the length-weighted average fiber length of the fibrous filler (B) is 5 mm or more and less than 50 mm, it is possible to produce a molded article having small variations in physical properties in a case of using a liquid crystal polyester resin pellet containing the fibrous filler (B), in any molding method of injection molding (extrusion molding) or press molding (compression molding), and thus the selectivity of the processing method at the producing site is improved.

When the length-weighted average fiber length of the fibrous filler (B) is within the preferred range described above, it is possible to produce a molded article having smaller variations in physical properties.

The fibrous filler contained in the liquid crystal polyester resin pellet according to the present embodiment may be a fibrous inorganic filling material or may be a fibrous organic filling material.

Examples of the fibrous inorganic filling material include a glass fiber; a carbon fiber; a ceramic fiber such as a silica fiber, an alumina fiber, or a silica-alumina fiber; a fiber of metal such as iron, gold, copper, aluminum, brass, or stainless steel; a silicon carbide fiber; and a boron fiber.

In addition, examples of the fibrous inorganic filling material include whiskers such as a potassium titanate whisker, a barium titanate whisker, a wollastonite whisker, an aluminum borate whisker, a silicon nitride whisker, and a silicon carbide whisker.

Examples of the fibrous organic filling material include a polyester fiber, a paraor meta-aramid fiber, and a PBCI fiber.

The fibrous filler in the present embodiment is preferably, among the above, a glass fiber or a carbon fiber.

### · Glass fiber

The kind of the glass fiber is not particularly limited, and known glass fibers can be used. Examples thereof include E-glass (that is, alkali-free glass), C-glass (that is, glass for acid-resistant use applications), AR-glass (that is, glass for alkali-resistant use applications), S-glass, and T-glass.

The glass fiber may be a surface-treated glass fiber or may be a glass fiber that has not been surface-treated.

The glass fiber can be subjected to treatment with a modifier, a silane coupling agent, a boron compound, or the like. Examples of the modifier include an aromatic urethane-based modifier, an aliphatic urethane-based modifier, and an acrylic modifier.

Among the above, E-glass is preferable as the glass fiber.

### · Carbon fiber

The kind of the carbon fiber is not particularly limited, and known carbon fibers can be used. For example, it is preferably a PAN-based, pitch-based, rayon-based, phenol-based, or lignin-based carbon fiber, more preferably a PAN-based carbon fiber or a pitch-based carbon fiber, and still more preferably a PAN-based carbon fiber.

In addition, for the intended purpose of imparting conductivity, carbon fibers coated with a metal such as nickel, copper, or ytterbium can also be used.

Examples of the PAN-based carbon fiber include "Zoltek (registered trade name)" manufactured by Zoltek Corporation; "TORAYCA (registered trade name)" manufactured by Toray Industries, Inc.; "PYROFIL (registered trade name)" and "GRAFIL (registered trade name)" manufactured by Mitsubishi Chemical Corporation; "Tenax (registered trade name)" manufactured by TEIJIN LIMITED; "TAIRYFIL (registered trade name)" manufactured by Formosa Plastics Corporation; and "SIGRAFIL (registered trade name)" manufactured by SGL Carbon AG.

The tensile strength of the carbon fiber is preferably 2,500 MPa or more, more preferably 3,500 MPa or more, and still more preferably 4,000 MPa or more.

The fiber breakage during processing up to the production of the molded article is suppressed when carbon fibers having a high tensile strength are used, and it is possible to further improve the mechanical characteristics when the fibers can be left for a long time.

The upper limit value of the tensile strength of the carbon fiber is, for example, 6,000 MPa or less.

The tensile strength of the carbon fiber means a value measured in accordance with JIS R 7606:2000.

The tensile elastic modulus of the carbon fiber is preferably 1 80 GPa or more, more preferably 200 GPa or more, still more preferably 220 GPa or more, and particularly preferably 240 GPa or more.

In a case of using carbon fibers having a high tensile elastic modulus, it is possible to improve the elastic modulus of the molded article.

The upper limit value of the tensile elastic modulus of the carbon fiber is, for example, 800 GPa or less.

The tensile elastic modulus of the carbon fiber means a value measured in accordance with JIS R 7606:2000.

The tensile elongation of the carbon fiber is preferably 0.4% or more, more preferably 0.6% or more, still more preferably 0.8% or more, and particularly preferably 1 .0% or more.

In a case of using carbon fibers having a high tensile elongation, it is possible to improve the tensile elongation of the molded article. The upper limit value of the tensile elongation of the carbon fiber is, for example, 10% or less.

The tensile elongation of the carbon fiber means a value measured in accordance with JIS R 7606:2000.

The number of fibers of the fibrous filler (B) is preferably 3,000 or more, more preferably 10,000 or more, and still more preferably 30,000 or more.

In addition, the number of fibers of the fibrous filler (B) is preferably 60,000 or less, more preferably 60,000 or less, and still more preferably 55,000 or less.

For example, the number of fibers of the fibrous filler (B) is preferably 3,000 or more and 60,000 or less, more preferably 10,000 or more and 60,000 or less, and still more preferably 30,000 or more and 55,000 or less.

In a method for measuring the number of fibers of the fibrous filler (B) in the resin pellet, the number thereof can be determined by, for example, subjecting one pellet to the removal of the resin content with the same method as in the procedure (1) of [Measurement of length-weighted average fiber length of fibrous filler (B) in resin pellet] described above, taking out one fiber having the same length as the pellet length from the fibrous filler (B), and dividing the total weight of the obtained fibrous filler (B) by the weight of one fiber.

When the number of fibers of the fibrous filler (B) is within the preferred range described above, it is possible to further suppress variations in the physical properties of the molded article that is produced from the liquid crystal polyester resin pellet containing the fibrous filler (B).

The number-average fiber diameter of the fibrous filler (B) is not particularly limited; however, it is preferably 1 to 40 µm and more preferably 3 to 35 µm.

It is preferably 1 to 15 µm, more preferably 3 to 10 µm, and still more preferably 4 to 9 µm when the fibrous filler (B) is carbon fibers.

It is preferably 5 to 35 µm, more preferably 10 to 25 µm, and still more preferably 10 to 20 µm when the fibrous filler (B) is glass fibers.

In a method for measuring the number-average fiber diameter of the fibrous filler (B) in the resin pellet, it is possible to adopt the number-average value of values obtained by, for example, removing the resin content with the same method as in the procedure (1) of [Measurement of length-weighted average fiber length of fibrous filler (B) in resin pellet] described above, observing the obtained fibrous filler (B) under a scanning electron microscope (1,000 times), and measuring the fiber diameters of the 500 fibrous fillers (B) which have been randomly selected.

When the number-average fiber diameter of the fibrous filler (B) is within the preferred range described above, the mechanical strength is efficiently improved by the fibrous filler (B).

The amount of the fibrous filler (B) is preferably 10% by mass or more, more preferably 15% by mass or more, and still more preferably 20% by mass or more, with respect to 100% by mass of the total amount of the liquid crystal polyester resin pellets.

In addition, the amount of the fibrous filler (B) is preferably 60% by mass or less, more preferably 55% by mass or less, and still more preferably 50% by mass or less, with respect to 100% by mass of the total amount of the liquid crystal polyester resin pellets.

For example, the amount of the fibrous filler (B) is preferably 10% by mass or more and 60% by mass or less, more preferably 15% by mass or more and 55% by mass or less, and still more preferably 20% by mass or more and 50% by mass or less, with respect to 100% by mass of the total amount of the liquid crystal polyester resin pellets.

When the amount of the fibrous filler (B) is within the preferred range described above, the mechanical strength can be further improved.

The amount of the fibrous filler (B) is preferably 10 parts by mass or more, more preferably 20 parts by mass or more, and still more preferably 30 parts by mass or more, with respect to 100 parts by mass of the liquid crystal polyester resin (A).

In addition, the amount of the fibrous filler (B) is preferably 150 parts by mass or less, more preferably 90 parts by mass or less, and still more preferably 85 parts by mass or less, with respect to 100 parts by mass of the liquid crystal polyester resin (A).

For example, the amount of the fibrous filler (B) is preferably 10 parts by mass or more and 150 parts by mass or less, more preferably 20 parts by mass or more and 90 parts by mass or less, and still more preferably 30 parts by mass or more and 85 parts by mass or less, with respect to 100 parts by mass of the liquid crystal polyester resin (A).

When the amount of the fibrous filler (B) with respect to the amount of the liquid crystal polyester resin (A) is within the preferred range described above, the anisotropy of the liquid crystal polyester resin (A) can be appropriately relaxed, and the variations in physical properties can be further suppressed.

### <Other components>

In addition to the above-described liquid crystal polyester resin (A) and fibrous filler (B), the liquid crystal polyester resin pellet according to the present embodiment may contain, as necessary, one or more of a thermoplastic resin other than the liquid crystal polyester resin (A), an additive, and the like.

### · Thermoplastic resin other than liquid crystal polyester resin (A)

Examples of the thermoplastic resin include polyolefin resins such as polyethylene, polypropylene, polybutadiene, and polymethylpentene; vinyl-based resins such as vinyl chloride, vinylidene chloride vinyl acetate, and polyvinyl alcohol; polystyrene-based resins such as polystyrene, an acrylonitrile-styrene resin (AS resin), and an acrylonitrile-butadiene-styrene resin (ABS resin); polyamide-based resins such as polyamide 6 (nylon 6), polyamide 66 (nylon 66), polyamide 11 (nylon 11), polyamide 12 (nylon 12), polyamide 46 (nylon 46), polyamide 610 (nylon 610), polytetramethylene terephthalamide (nylon 4T), polyhexamethylene terephthalamide (nylon 6T), polymetaxylylene adipamide (nylon MXD6), polynonamethylene terephthalamide (nylon 9T), and polydecamethylene terephthalamide (nylon 10T); polyester-based resins such as polyethylene terephthalate, polyethylene naphthalate, polybutylene terephthalate, and polytrimethylene terephthalate; polysulfone-based resins such as modified polysulfone, polyethersulfone, polysulfone, and polyphenyl sulfone; polyphenylene sulfides such as a linear polyphenylene sulfide, a cross-linked polyphenylene sulfide, and a semi-cross-linked polyphenylene sulfide; polyether ketones such as polyetherketone, polyetheretherketone, and polyether ketoneketone; polycarbonate; polyphenylene ether; and polyimide-based resins such as a thermoplastic polyimide, polyamide-imide, and polyetherimide.

### · Additive

Examples of the additives include a flame retardant, a conductivity imparting agent, a crystal nucleating agent, a UV absorber, an antioxidant, an anti-vibration agent, an antibacterial agent, an insect repellent, a deodorant, a coloring inhibitor, a heat stabilizer, a mold release agent, an antistatic agent, a plasticizer, a lubricant, a colorant, a pigment, a dye, a foaming agent, an antifoaming agent, a viscosity modifier, and a surfactant.

Examples of the lubricant include a wax (carnauba wax or the like), a higher fatty acid (stearic acid or the like), a higher fatty acid salt, a higher alcohol (stearyl alcohol or the like), and a higher fatty acid amide (a stearic acid amide, an erucic acid amide, or the like). From the viewpoint of heat resistance during molding, a higher fatty acid salt is preferable, and a higher fatty acid metal salt is more preferable.

The higher fatty acid metal salt is a metal salt of a long-chain fatty acid having 12 or more carbon atoms. The number of carbon atoms thereof is preferably 12 or more and 28 or less, and the number of carbon atoms thereof is more preferably 12 or more and 18 or less.

Specific examples of the long-chain fatty acid include lauric acid, myristic acid, palmitic acid, stearic acid, oleic acid, behenic acid, and montanoic acid.

Specific examples of the higher fatty acid metal salt include lithium laurate, calcium laurate, barium laurate, lithium stearate, barium stearate, sodium stearate, potassium stearate, calcium stearate, aluminum stearate, magnesium stearate, magnesium behenate, calcium behenate, and barium behenate.

As described above, the liquid crystal polyester resin pellet according to the present embodiment contains the liquid crystal polyester resin (A) and the fibrous filler (B), where the length-weighted average fiber length of the fibrous filler (B) is 5 mm or more and less than 50 mm, the pellet length of the liquid crystal polyester resin pellet and the length-weighted average fiber length of the fibrous filler (B) are substantially the same, and D1/D2 of the cross section of the liquid crystal polyester resin pellet is 2.0 or more and 100 or less.

Because the liquid crystal polyester resin pellet is produced such that the pellet length thereof and the length-weighted average fiber length of the fibrous filler (B) are substantially the same, and the length-weighted average fiber length of the fibrous filler (B) is controlled in a specific range, it is possible to appropriately disturb the orientation of the liquid crystal polyester resin (A) when the resin pellet is melted. In addition, in the resin pellet, D1/D2 of the resin pellet is controlled in a specific range, and thus it is possible to reduce the influence of dispersion action due to resin flow during melting, and it is possible to appropriately control the dispersion of the fibrous filler (B).

As a result, according to the liquid crystal polyester resin pellet according to the present embodiment, it is possible to produce a molded article having small variations in physical properties in a case of being used for any of injection molding (extrusion molding) or press molding (compression molding).

In addition, according to the liquid crystal polyester resin pellet according to the present embodiment, it is possible to produce a molded article having small variations in physical properties even when the fibrous filler (B) having a relatively large number of fibers (about 30,000 to 55,000) (for example, large tow) is used.

### (Method for producing liquid crystal polyester resin pellet)

In the method for producing the liquid crystal polyester resin pellet in the present embodiment, the liquid crystal polyester resin pellet is obtained by, for example, subjecting the liquid crystal polyester resin (A) to melt kneading with other components as necessary, and impregnating the fibrous filler (B) with the obtained molten material with the thermoplastic resin (A) to carry out pelletization.

### · Producing apparatus for liquid crystal polyester resin pellet

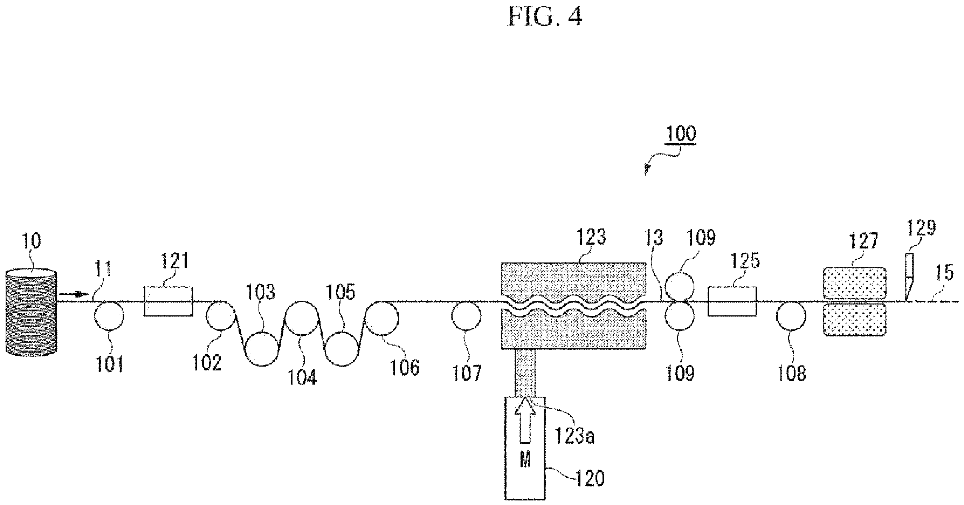

FIG. 4 shows one embodiment of a producing apparatus for the liquid crystal polyester resin pellet.

In the present embodiment shown in FIG. 4, a description will be made for a case of obtaining resin pellets 15 by using a fiber roving 10 in which a fiber bundle 11 in which a plurality of fibrous fillers are made to converge with a sizing-agent is rolled up into a roll.

As shown in FIG. 4, a producing apparatus 100 includes a pre-heating part 121, an impregnation part 123, a cooling part 125, a pick-up part 127, a cutting part 129, transport rolls 101 to 108, and a shaping roll 109. In the producing apparatus 100 shown in FIG. 4, an extruder 120 is connected to the impregnation part 123.

FIG. 4 shows a state in which the fiber bundle 11 is continuously unrolled from the fiber roving 10. In the present embodiment, the resin pellets 15 are produced while the fiber bundle 11 unrolled from the fiber roving 10 is transported in the longitudinal direction by the transport rolls 101 to 108.

The number-average fiber diameter of the fiber roving 10 is not particularly limited; however, it is preferably 1 µm to 40 µm and more preferably 3 µm to 35 µm.

It is preferably 1 to 15 µm, more preferably 3 to 10 µm, and still more preferably 4 to 9 µm when the fibrous filler is carbon fibers.

It is preferably 5 to 35 µm, more preferably 10 to 25 µm, and still more preferably 10 to 20 µm when the fibrous filler is glass fibers.

For the number-average fiber diameter of the fiber roving 10, the fibrous filler is observed by a scanning electron microscope (1,000 times), and the number-average value of values obtained by measuring the fiber diameters of the 500 fibrous fillers which have been randomly selected is adopted.

When the number-average fiber diameter of the fiber roving 10 is within the preferred range described above, the mechanical strength is efficiently improved.

In the present embodiment, a fibrous filler which has been subjected to treatment with a sizing-agent (sizing agent) is used as the fibrous filler. A fibrous filler which has been appropriately subjected to sizing treatment has excellent productivity and quality stability during pellet production and thus makes it possible to reduce the variations in physical properties of the molded article.

The sizing-agent (sizing agents) is not particularly limited. However, examples thereof include a nylon-based polymer, a polyether-based polymer, an epoxy-based polymer, an ester-based polymer, a urethane-based polymer, or a mixed polymer thereof, or a modified polymer of each of the above polymers. In addition, it is also possible to use known coupling agents such as so-called silane coupling agents such as amino silane and epoxy silane, and titanium coupling agents.

In the fibrous filler that is used in the resin pellet according to the present embodiment, it is not necessary for the single fibers to be arranged in one direction; however, a state in which the single fibers are arranged in one direction and the fiber bundle is continuous over the length direction of the fibers is preferable from the viewpoint of the productivity in the process of producing a molding material.

The number of fibers in the fiber roving 10 is preferably 3,000 or more, more preferably 10,000 or more, and still more preferably 30,000 or more.

In addition, the number of fibers in the fiber roving 10 is preferably 60,000 or less, more preferably 60,000 or less, and still more preferably 55,000 or less.

For example, the number of fibers in the fiber roving 10 is preferably 3,000 or more and 60,000 or less, more preferably 10,000 or more and 60,000 or less, and still more preferably 30,000 or more and 55,000 or less.

When the number of fibers of the fiber roving 10 is within the preferred range described above, it is possible to further suppress variations in the physical properties of the molded article that is produced from the liquid crystal polyester resin pellet that is produced by using the fiber roving 10.

In the pre-heating part 121, the fiber bundle 11 that is unrolled from the fiber roving 10 is dried by heating. The heating temperature at that time is not particularly limited; however, it is, for example, 50°C to 250°C.

In addition, the heating time in the pre-heating part 121 is not particularly limited; however, it is, for example, 3 seconds to 30 seconds.

In the impregnation part 123, the fiber bundle 11 is impregnated with a molding material M (the liquid crystal polyester resin (A) and other components to be blended as necessary) other than the fiber bundle 11.

The molding material M may be charged from a supply port 123a, and the fiber bundle 11 may be impregnated with a molten material obtained by carrying out heating, in the impregnation part 123. Alternatively, the molding material M which has been subjected to melt kneading may be charged from the supply port 123a by the extruder 120 to impregnate the fiber bundle 11.

Then, in the embodiment shown in FIG. 4, a resin structural body 13, in which the fiber bundle 11 has been impregnated and coated with the molten material, is obtained.

The heating temperature in the impregnation part 123 is appropriately determined according to the kind of the liquid crystal polyester resin (A). It is preferably set to a temperature that is higher by 10°C to 80°C than the flow starting temperature of the liquid crystal polyester resin (A), and it is, for example, 300°C to 400°C.

In the impregnation part 123, depending on the characteristics and the like demanded for the molded article, 100 parts by mass of the liquid crystal polyester resin (A) is subjected to impregnation with preferably 10 parts by mass or more and 150 parts by mass or less of the fibrous filler (fiber bundle 11), more preferably 20 parts by mass or more and 90 parts by mass or less of the fibrous filler, and still more preferably 30 parts by mass or more and 80 parts by mass or less of the fibrous filler.

When the blending amount of the fibrous filler is equal to or larger than the lower limit value of the preferred range described above, the variations in physical properties are further suppressed. On the other hand, when it is equal to or smaller than the upper limit value of the preferred range described above, the fiber opening of the fiber bundle 11 and the impregnation of the fiber bundle with the liquid crystal polyester resin (A) are likely to be easy.

In a case of changing a size of a shape forming nozzle of a die head at an outlet of the impregnation part 123, with respect to the diameter of the fiber bundle 11, it is possible to adjust the blending ratio of the liquid crystal polyester resin (A) to the fibrous filler (B) in the resin structural body 13.

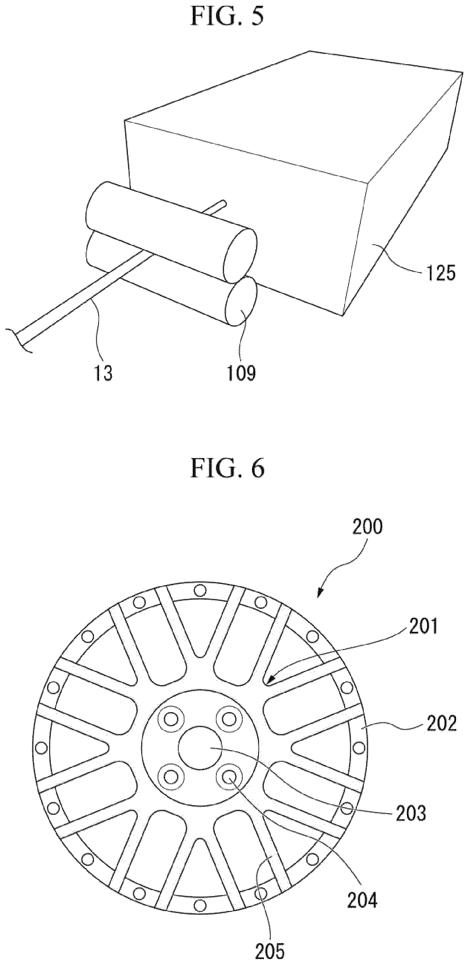

As shown in FIG. 5, the resin structural body 13 in a state of being heated in the impregnation part 123 (the resin structural body 13 in which the fiber bundle has been impregnated and coated with the molten material) passes between a pair of shaping rolls 109 disposed vertically, there by being shaped so that the ratio D1/D2 of the major axis D1 to the minor axis D2 of the cross section of the resin pellets 15 to be finally obtained could be 2.0 or more and 100 or less.

In addition, when the resin structural body 13 passes between the shaping rolls 109, it is possible to suppress the generation of the froth derived from the fibrous filler (B).

The material of the shaping roll 109 is not particularly limited; however, a metal material is preferable from the viewpoint of heat resistant temperature and appropriate heat dissipation. In addition, the surface of the shaping roll 109 is preferably smooth.

Examples of the metal as the material of the shaping roll 109 include iron, copper, nickel, gold, silver, platinum, cobalt, zinc, lead, tin, titanium, chromium, aluminum, magnesium, manganese, and alloys thereof (stainless steel, brass, phosphor bronze, and the like). In addition, a metal as a thin film or a coat (a plating metal, a vapor deposition film, a coating film, or the like) may be favorable. Among them, stainless steel is more preferable from the viewpoints of corrosion resistance and heat dissipation.

The temperature of the resin structural body 13 when the resin structural body 13 is allowed to pass between the shaping rolls 109 is not particularly limited; however, it is preferably -100°C to +60°C and more preferably 0°C to +60°C with respect to the flow starting temperature of the liquid crystal polyester resin (A) to be contained.

When the temperature of the resin structural body 13 at the time when the resin structural body 13 is allowed to pass between the shaping rolls 109 is a temperature that is equal to or higher than "the flow starting temperature of the liquid crystal polyester resin (A) to be contained - 100°C", it is easy to shape the resin structural body 13 into a desired shape.

In addition, when the temperature of the resin structural body 13 is a temperature that is equal to or lower than "the flow starting temperature of the liquid crystal polyester resin (A) to be contained + 60°C", the resin structural body 13 is less likely to be stuck to the shaping roll 109.

The shaping roll 109 is preferably a roller type shaping roll having a bearing inside. In a case of using the roller type, the pressure during shaping can be released in the transportation direction, and thus uneven impregnation or fluffing can be suppressed.

The bearing inside the shaping roll 109 is not particularly limited to a ball bearing, an angular ball bearing, a cylindrical roller bearing, a tapered roller bearing, a spherical roller bearing, a needle bearing, or a slide bearing; however, a ball bearing that has low rotational resistance and has excellent balance with the pick-up speed can be preferably used.

The disposition position of the shaping roll 109 is not particularly limited; however, a position 15 cm away from the die head where the die 123 has an outlet is preferable. When the shaping roll 109 is made to be away from the die head by 15 cm, it is possible to carry out dissipation while obtaining the influence of the heat of the heater of the die head, and thus it is possible to further stabilize the temperature of the shaping roll 109. The distance referred to here refers to the distance from the die head to the contact point between the shaping roll 109 and the resin structural body 13.

In addition, the disposition position of the shaping roll 109 is not particularly limited; however, a position 15 cm away from the cooling part 125 is preferable. When the shaping roll 109 is made to be away from the cooling part 125 by 15 cm, it is possible to further stabilize the temperature of the shaping roll 109 while obtaining the influence of the cooling part 125. The distance referred to here refers to the distance from the contact point between the shaping roll 109 and the resin structural body 13 to the cooling part 125.

Therefore, the disposition position of the shaping roll 109 disposed between the die head and the cooling part 125 is preferably a position 15 cm away from both the die head and the cooling part 125.

In the cooling part 125, the resin structural body 13 shaped by the shaping roll 109 is cooled to, for example, 50°C to 150°C. The cooling time is not particularly limited; however, it is, for example, 3 seconds to 30 seconds.

In the pick-up part 127, the resin structural body 13 cooled in the cooling part 125 is continuously picked up and unrolled to the next cutting part 129.

In the cutting part 129, the resin structural body 13 after cooling is cut to a predetermined length to produce the resin pellets 15. The cutting part 129 includes, for example, a rotary blade or the like.

### · Method for producing liquid crystal polyester resin pellet using producing apparatus 100

Using the producing apparatus 100 described above, the liquid crystal polyester resin pellet according to the present embodiment is produced as follows.

### Step of obtaining resin structural body:

First, the fiber bundle 11 is heated to be dried in the pre-heating part 121 while carrying out continuous unrolling of the fiber bundle 11, in which a plurality of single fibers are made to converge with a sizing-agent, from the fiber roving 10.

Next, while supplying the fiber bundle 11 after drying to the impregnation part 123, the molding material M, which has been subjected to melt kneading, is charged from the supply port 123a by the extruder 120 to impregnate the fiber bundle 11 with the molding material M in the melted state. As a result, a resin structural body 13, in which the fiber bundle has been impregnated and coated with the molten material, is obtained. Thereafter, the resin structural body 13 heated in the impregnation part 123 is shaped by the shaping roll 109. Next, the shaped resin structural body 13 is cooled in the cooling part 125.

In the resin structural body 13 to be obtained here, the fibers are arranged to be substantially parallel to the longitudinal direction of the resin structural body 13.

The phrase "the fibers are arranged to be substantially parallel to the longitudinal direction of the resin structural body" indicates that the angle between the longitudinal direction of the fiber and the longitudinal direction of the resin structural body is substantially 0°, specifically, a state where the angle between the both longitudinal directions of the fiber and the resin structural body is -5° to 5°.

### Step of obtaining pellet:

Next, the resin structural body 13 after cooling is picked up in a strand shape at the pick-up part 127 and is unrolled to the cutting part 129.

Next, in the cutting part 129, the strand-shaped resin structural body 13 is cut in the longitudinal direction at a predetermined length to obtain the resin pellets 15.

Here, the predetermined length referred to for the resin pellets 15 is a length such that the length-weighted average fiber length of the fibrous filler (B) is 5 mm or more and less than 50 mm, and typically, the cutting is carried out so that the pellet length of the resin pellets 15 could be 5 mm or more and less than 50 mm.

In the same manner as described above, the liquid crystal polyester resin pellet (the resin pellets 15) containing the liquid crystal polyester resin (A) and the fibrous filler (B) are produced.

The resin pellets 15 are resin pellets obtained by hardening the fibrous filler (B) with the liquid crystal polyester resin (A), where the fibrous filler is arranged to be substantially parallel to the longitudinal direction of the pellet. In addition, the length of the fibrous filler arranged in the resin pellets 15 is substantially the same length as the length of the pellet. The length of the resin pellets 15 produced in the present embodiment is, for example, 5 mm or more and less than 50 mm.

In this way, the fibrous filler is arranged to be substantially parallel to the longitudinal direction of the pellet and the length of the fibrous filler is set to be substantially the same length as the length of the pellet. Therefore, it is possible for the remaining fibrous filler to be made into long fibers in a case of producing a molded article by using the pellet, which is effective for the improvement of the strength, the improvement of the heat resistance, and the relaxation of the anisotropy with respect to the molded article.

In the present embodiment shown in FIG. 4, the resin structural body 13 is shaped by using the shaping roll 109, thereby being controlled so that D1/D2 of the cross section of the resin pellet 15 could be 2.0 or more and 100 or less. However, the D1/D2 in the resin pellets 15 may be controlled to be 2.0 or more and 100 or less by setting the shape of the die head at the outlet of the impregnation part 123 to a specific shape.

In addition, although a pair of the shaping rolls 109 disposed vertically are used, the aspect thereof is not particularly limited as long as the shape of the resin structural body 13 can be changed. For example, only one shaping roll (on one side) may be disposed; however, it is preferable to dispose the shaping rolls vertically from the viewpoint of shaping properties.

When the shaping rolls are vertically disposed, the gap between the upper and lower rolls depends on the fineness of the fibrous filler (B) to be used or the size (volume content) of the resin structural body 13; however, it is preferably adjusted to be approximately the same as or less than the width of D2 of the pellet to be produced. Specifically, the gap between the upper and lower rolls is preferably 3.0 mm or less, more preferably 450 µm or more and 3.0 mm or less, still more preferably 450 µm or more and 2.0 mm or less, and particularly preferably 450 µm or more and 1.0 mm or less. The more preferred range of the above-described range, the more the impregnation properties of the resin pellets are improved. The gap between the upper and lower rolls indicates a distance between contact points of the resin structural body and the roll when the resin structural body has been allowed to pass through the roll at a pick-up speed of 0 m/min.

The present invention has the following aspects.

"1" A liquid crystal polyester resin pellet containing:
   a liquid crystal polyester resin (A); and
   a fibrous filler (B),
   in which the length-weighted average fiber length of the fibrous filler (B) is 5 mm or more and less than 50 mm,
   the pellet length of the liquid crystal polyester resin pellet and the length-weighted average fiber length of the fibrous filler (B) are substantially the same, and
   a ratio D1/D2 of a major axis D1 to a minor axis D2 of a cross section of the liquid crystal polyester resin pellet is 2.0 or more and 100 or less.
"2" The liquid crystal polyester resin pellet according to "1", in which a amount of the liquid crystal polyester resin (A) is preferably 40% by mass or more and 90% by mass or less, more preferably 45% by mass or more and 85% by mass or less, and still more preferably 50% by mass or more and 80% by mass or less, with respect to 100% by mass of the total amount of the liquid crystal polyester resin pellets.
"3" The liquid crystal polyester resin pellet according to "1" or "2", in which the amount of the fibrous filler (B) is preferably 10% by mass or more and 60% by mass or less, more preferably 15% by mass or more and 55% by mass or less, and still more preferably 20% by mass or more and 50% by mass or less, with respect to 100% by mass of the total amount of the liquid crystal polyester resin pellets.
"4" The liquid crystal polyester resin pellet according to any one of "1" to "3", in which the liquid crystal polyester resin pellet has characteristics that:
   when the liquid crystal polyester resin pellet is charged into a hopper of an injection molding machine TR450EH3 (manufactured by Sodick Co., Ltd.) and injected into a mold having a mold temperature of 100°C at an injection speed of 200 mm/s in the injection molding machine having a cylinder temperature of 360°C to produce a flat plate-shaped molded article having a size of 150 mm × 150 mm × thickness 4 mm, a 120 mm × 120 mm portion of the central part of the flat plate-shaped molded article is used and cut to have a shape having a width of 10 mm, a length of 80 mm, and a thickness of 4 mm so that the length direction could be MD, thereby producing five test pieces for evaluation in the MD direction, and the five test pieces for evaluation in the MD direction are subjected to the measurement of the bending elastic modulus in the MD direction in accordance with ISO178,
   a flat plate-shaped molded article is produced according to the same procedure, a 120 mm × 120 mm portion of the central part of the flat plate-shaped molded article is used and cut to have a shape having a width of 10 mm, a length of 80 mm, and a thickness of 4 mm so that the length direction could be TD, thereby producing five test pieces for evaluation in the TD direction, and the five test pieces for evaluation in the TD direction are subjected to the measurement of the bending elastic modulus in the TD direction in accordance with ISO178, and
   the ratio of the value of the MD bending elastic modulus to the TD bending elastic modulus is taken to determine a bending elastic modulus ratio (MD/TD),
   the bending elastic modulus ratio (MD/TD) × 100 is preferably 0.9 or more and less than 2, more preferably 0.9 or more and 1.98 or less, and still more preferably 0.9 or more and 1.95 or less.
"5" The liquid crystal polyester resin pellet according to any one of "1" to "4", in which the liquid crystal polyester resin pellet has characteristics that: when the liquid crystal polyester resin pellet is charged into a hopper of an injection molding machine TR450EH3 (manufactured by Sodick Co., Ltd.) and injected into a mold having a mold temperature of 100°C at an injection speed of 200 mm/s in the injection molding machine having a cylinder temperature of 360°C to produce a flat plate-shaped molded article having a size of 150 mm × 150 mm × thickness 4 mm, a 120 mm × 120 mm portion of the central part of the flat plate-shaped molded article is used and cut to have a shape having a width of 10 mm, a length of 80 mm, and a thickness of 4 mm so that the length direction could be MD, thereby producing five test pieces for evaluation in the MD direction, and the five test pieces for evaluation in the MD direction are subjected to the measurement of the bending strength in the MD direction in accordance with ISO178,
   a flat plate-shaped molded article is produced according to the same procedure, a 120 mm × 120 mm portion of the central part of the flat plate-shaped molded article is used and cut to have a shape having a width of 10 mm, a length of 80 mm, and a thickness of 4 mm so that the length direction could be TD, thereby producing five test pieces for evaluation in the TD direction, and the five test pieces for evaluation in the TD direction are subjected to the measurement of the bending strength in the TD direction in accordance with ISO 178, and
   the ratio of the value of the MD bending strength to the TD bending strength is taken to determine a bending strength ratio (MD/TD),
   the bending strength ratio (MD/TD) × 100 is preferably 0.9 or more and less than 2, more preferably 0.9 or more and 1.98 or less, and still more preferably 0.9 or more and 1.95 or less.
"6" A liquid crystal polyester resin pellet that has characteristics that:
   when the liquid crystal polyester resin pellet according to any one of "1" to "5" is subjected to pressing for 5 minutes at a hot plate temperature of 340°C, a pressurization pressure of 2.0 MPa, and a vacuum degree of 2.0 kPa by using a press machine and cooled to room temperature to produce a press-molded article, thereby producing a press-molded article having a size of 250 mm × 250 mm × thickness 4 mm, a 120 mm × 120 mm portion of the central part of the press-molded article is used and cut to have a shape having a width of 10 mm, a length of 80 mm, and a thickness of 4 mm, thereby producing five plate-shaped test pieces, the five plate-shaped test pieces are subjected to the measurement of the bending elastic modulus in accordance with ISO178, and the standard deviation of the bending elastic moduli is divided by the average value of the bending elastic moduli to calculate a coefficient of variation CV value (bending elastic modulus CV value) is calculated,
   the bending elastic modulus CV value is preferably 32 or less, more preferably 30 or less, and still more preferably 28 or less.
"7" A liquid crystal polyester resin pellet that has characteristics that:
   when the liquid crystal polyester resin pellet according to any one of "1" to "6" is subjected to pressing for 5 minutes at a hot plate temperature of 340°C, a pressurization pressure of 2.0 MPa, and a vacuum degree of 2.0 kPa by using a press machine and cooled to room temperature to produce a press-molded article, thereby producing a press-molded article having a size of 250 mm × 250 mm × thickness 4 mm, a 120 mm × 120 mm portion of the central part of the press-molded article is used and cut to have a shape having a width of 10 mm, a length of 80 mm, and a thickness of 4 mm, thereby producing five plate-shaped test pieces, the five plate-shaped test pieces are subjected to the measurement of the bending strength in accordance with ISO178, and the standard deviation of the bending strengths is divided by the average value of the bending strengths to calculate a coefficient of variation CV value (bending strength CV value) is calculated,
   the bending strength CV value is preferably 46 or less, more preferably 44 or less, and still more preferably 42 or less.
"8" The liquid crystal polyester resin pellet according to any one of "1" to "7", in which the fibrous filler (B) is carbon fibers, the tensile strength of the carbon fiber is preferably 2,500 MPa or more, more preferably 3,500 MPa or more, and still more preferably 4,000 MPa or more,
   the tensile elastic modulus of the carbon fiber is preferably 180 GPa or more, more preferably 200 GPa or more, still more preferably 220 GPa or more, and particularly preferably 240 GPa or more, and
   the tensile elongation of the carbon fiber is preferably 200 GPa or more, more preferably 250 GPa or more, still more preferably 500 GPa or more, and particularly preferably 650 GPa or more.

### (Molded article)

The molded article according to the present embodiment is a molded article produced by using the liquid crystal polyester resin pellet described above.

It is possible to obtain the molded article according to the present embodiment by a known molding method using the liquid crystal polyester resin pellet. Specifically, the molding method is preferably a melt molding method, and examples thereof include injection molding, blow molding, vacuum molding, and press molding. Among them, injection molding or press molding is preferable.

For example, when the liquid crystal polyester resin pellet described above is used as a molding material and molded according to an injection molding method, the liquid crystal polyester resin pellet is melted using a known injection molding machine, and the melted liquid crystal polyester resin pellet is molded by being injected into a mold.

Examples of the known injection molding machine include TR450EH3 manufactured by Sodick Co., Ltd., and a hydraulic horizontal molding machine, model: PS40E5ASE, manufactured by NISSEI PLASTIC INDUSTRIAL Co., Ltd.

The temperature conditions for injection molding are appropriately determined according to the kind of the liquid crystal polyester resin (A), and it is preferable to set the cylinder temperature of the injection molding machine to a temperature that is higher by 10°C to 80°C than the flow starting temperature of the liquid crystal polyester resin (A) to be used.

In terms of productivity, the temperature of the mold is preferably set in a range of room temperature (for example, 23°C) to 180°C.

Other injection conditions, such as the screw rotation speed, the back pressure, the injection speed, the holding pressure, and the holding pressure time, may be adjusted as appropriate.

The length-weighted average fiber length of the fibrous filler (B) in the molded article according to the present embodiment is preferably 1 mm or more and less than 50 mm, preferably 1.1 mm or more and 45 mm or less, and still more preferably 1.1 mm or more and 40 mm or less.

When the length-weighted average fiber length of the fibrous filler (B) in the molded article according to the present embodiment is within the preferred range described above, the mechanical strength of the molded article can be further improved.

### [Measurement of length-weighted average fiber length of fibrous filler (B) in molded article]

Procedure (1): A part (for example, width 10 mm × length 20 mm × thickness 4 mm) is cut out from the molded article to obtain a test piece.

Next, the test piece containing carbon fibers is heated at 500°C for 3 hours in a muffle furnace, and the test piece containing glass fibers is heated at 600°C for 4 hours to remove the resin content.

Procedure (2): The resin content is removed from the test piece to obtain only the fibrous filler (B), and the resultant was dispersed in 1,000 mLof an aqueous solution containing 0.05% by volume of a surfactant (Micro 90, manufactured by INTERNATIONAL PRODUCTS CORPORATION) to prepare a fibrous filler dispersion liquid.

Procedure (3): 100 mL is extracted from the fibrous filler dispersion liquid and diluted to 10 times with pure water. 50 mL is extracted from the dispersion liquid after dilution and dispersed in a petri dish. Subsequently, the fibrous filler dispersed in the petri dish is observed with a microscope (main body: VHX-8000, manufactured by KEYENCE CORPORATION, magnification: 10 times to 25 times), and five images per sample are captured without overlaps of taken areas. However, when the fibrous filler is carbon fibers, 50 mL is extracted from the dispersion liquid after dilution and then filtered under reduced pressure using a Φ90 mm Kiriyama funnel filter paper (No. 5C), and images of the carbon fibers dispersed on the filter paper are captured.

Procedure (4): The fiber lengths of all of the five captured images are measured using image processing software (WinROOF2018, manufactured by MITANI CORPORATION) as follows.

### <Method for measuring fiber length>

(a) The captured images are subjected to the monochrome pixel conversion processing.
(b) Binarization processing is carried out so as to color only the imaged fiber.
(c) The fiber length is measured using the needle shape separation function of the image processing software.
(d) The fiber length of the fiber that could not be subjected to the binarization in (c) or the fiber length of the curved fiber is measured according to the multi-point measurement, and the fiber in contact with the edge of the image is not subjected to the measurement. However, in (c) and (d), fibers of 20 µm or less are determined to be noise and not included in the number n of fibers measured. In a case of n > 500, that is, when the number n of fibers measured does not exceed 500, the procedure returns to the procedure (3), additional images are captured, and the measurement is carried out until n exceeds 500.

Procedure (5): From the fiber lengths of the fibrous fillers measured in Procedure (4), the length-weighted average fiber length lm = (Σli² × ni)/(Σli × ni) is determined (Σni > 500).
li: Fiber length of fibrous filler
ni: Number of fibrous fillers having fiber length li

The above-described molded article according to the present embodiment is capable of being applied to any use applications to which the liquid crystal polyester resin is generally applicable, among which a use application in the automotive field is particularly suitable.

Examples of the use application in the automotive field include, as injection-molded articles for automobile interior materials, an injection-molded article for a ceiling material, an injection-molded article for a wheelhouse cover, an injection-molded article for a trunk compartment lining, an injection-molded article for an instrument panel surface material, an injection-molded article for a steering wheel cover, an injection-molded article for an armrest, an injection-molded article for a headrest, an injection-molded article for a seat belt cover, an injection-molded article for a shift lever boot, an injection-molded article for a console box, an injection-molded article for a horn pad, an injection-molded article for a knob, an injection-molded article for an airbag cover, injection-molded articles for various trims, injection-molded articles for various pillars, an injection-molded article for a door lock bezel, an injection-molded article for a grab box, an injection-molded article for a defroster nozzle, an injection-molded article for a scuff plate, an injection-molded article for a steering wheel, and an injection-molded article for a steering column cover.

In addition, examples of the injection-molded article for the automobile exterior material include an injection-molded article for a bumper, an injection-molded article for a spoiler, an injection-molded article for a mudguard, an injection-molded article for a side molding, an injection-molded article for a door mirror housing, and an injection-molded article for an underbody shield.

Examples of other injection-molded articles for automobile components include an injection-molded article for an automobile headlamp, an injection-molded article for a glass run channel, an injection-molded article for a weather strip, an injection-molded article for a hose such as an injection-molded article for a drain hose, an injection-molded article for a windshield washer tube, an injection-molded article for tubes, an injection-molded article for a rack and pinion boot, an injection-molded article for a gasket, an injection-molded article for a bumper beam, an injection-molded article for a crash box, injection-molded articles for various members, an injection-molded article for a suspension system, an injection-molded article for a front end module, an injection-molded article for a radiator support, and an injection-molded article for a back door inner part.

In addition, in addition to the above, it is also possible to apply the molded article according to the present embodiment to use applications such as a sensor, a LED lamp, a connector, a socket, a resistor, a relay case, a switch, a coil bobbin, a capacitor, a variable condenser case, an optical pickup, an oscillator, various terminal boards, a transformer, a plug, a printed circuit board, a tuner, a speaker, a microphone, a headphone, a small motor, a magnetic head base, a power module, a semiconductor, a liquid crystal display, an FDD carriage, an FDD chassis, a motor brush holder, a parabolic antenna, a computer related component, a microwave oven component, a sound and voice equipment component, a lighting component, an air conditioner component, an office computer related component, a telephone and fax-related component, and a copier-related component.

Because the liquid crystal polyester resin pellet described above is used, the molded article according to the present embodiment described above has small variations in physical properties.

The molded article according to the present embodiment is particularly suitable for being used as a tire wheel disk.

FIG. 6 shows a tire wheel disk 200 that is an example of a tire wheel disk according to the present embodiment.

The tire wheel disk 200 is fixed to a rim of a tire wheel.

As shown in FIG. 6, the tire wheel disk 200 according to the present embodiment is composed of a disk part 201 having a disk shape and a rim attachment part 202.

The disk part 201 includes a hub hole 203 that is open in the center, a hub attachment part 204 provided around the hub hole 203, and a spoke 205. Four hub attachment parts 204 are provided on a circle that is concentric with the hub hole 203.

The spokes 205 extend radially from the outside of the hub attachment part 204 to be linked to the rim attachment part 202.

A bolt is inserted through the hub attachment part 204, whereby an axle (not shown in the drawing) is fixed to the tire wheel disk 200. In addition, in the rim attachment part 202, bolt holes are arranged at regular intervals on the circumference of the rim. A piercing bolt is inserted through the bolt hole and fixed to the rim of the tire wheel (not shown in the drawing).

### [Examples]

Hereinafter, the present invention will be described in more detail with reference to specific examples. However, the present invention is not limited to Examples shown below.

### [Flow starting temperature of liquid crystal polyester resin]

A liquid crystal polyester resin described later was subjected to the evaluation of the flow starting temperature by using a flow tester (model: CFT-500, manufactured by Shimadzu Corporation). Specifically, a capillary type rheometer attached with a die having an inner diameter of 1 mm and a length of 10 mm was filled with approximately 2 g of the liquid crystal polyester resin. Next, the temperature at which the melt viscosity was 4,800 Pa□s (48,000 poises) was defined as the flow starting temperature when the liquid crystal polyester resin subjected to the filling was extruded from the nozzle of the rheometer with a temperature increase of 4°C/min at a load of 9.8 MPa (100 kg/cm²).

### [Measurement of length-weighted average fiber length of fibrous filler (carbon fiber or glass fiber) in resin pellet]

The length-weighted average fiber length of the fibrous filler in the resin pellet described later was measured according to the following method.

Procedure (1): 5 g of resin pellets were heated in a muffle furnace to remove a resin content.

Regarding the heating conditions, the fibrous filler was heated at 500°C for 3 hours in a case of being carbon fibers, and it was heated at 600°C for 4 hours in a case of being glass fibers.

Procedure (2): The resin content was removed from the resin pellets to obtain only the fibrous filler, which was subsequently dispersed in 1,000 mL of an aqueous solution containing 0.05% by volume of a surfactant (Micro 90, manufactured by INTERNATIONAL PRODUCTS CORPORATION) to prepare a fibrous filler dispersion liquid.

Procedure (3): 100 mL is extracted from the fibrous filler dispersion liquid and diluted to 10 times with pure water. 50 mL was extracted from the dispersion liquid after dilution and dispersed in a petri dish. Subsequently, the fibrous filler (B) dispersed in the petri dish was observed with a microscope (main body: VHX-8000, lens: VH-Z00R, manufactured by KEYENCE CORPORATION, magnification: 10 times), and five images per sample were captured such that the imaged regions did not overlap. However, when the fibrous filler was carbon fibers, 50 mL was extracted from the dispersion liquid after dilution and then filtered under reduced pressure using a Φ90 mm Kiriyama funnel filter paper (No. 5C), and images of the carbon fibers dispersed on the filter paper were captured.

Procedure (4): The lengths of all of the fibrous fillers present in one captured image were measured with a measurement tool of the microscope. The bent fibrous filler was measured according to the multi-point measurement. The five captured images were sequentially subjected to the same operation until the total number of the fibrous fillers measured was more than 500, and the fiber length of the fibrous filler was measured.

Procedure (5): From the fiber lengths of the fibrous fillers measured in Procedure (4), the length-weighted average fiber length lm = (Σli² × ni)/(Σli × ni) was determined (Σni > 500).
li: Fiber length of fibrous filler
ni: Number of fibrous fillers having fiber length li

### [Measurement of major axis D1 and minor axis D2 of cross section of resin pellet]

Procedure (i): Resin pellets of each example were placed in a columnar mold that was sufficiently larger than the resin pellets of each example, and using a fixing jig (Holding blue clips (plastic), manufactured by PRES1 Co., Ltd.), the resin pellets of each example were erected and fixed so that the length direction thereof was perpendicular to the bottom surface of the mold.

Procedure (ii): A solution obtained by adding a Cold-Mounting Resin No. 105 (manufactured by Struers) and an M agent (curing agent) for the No. 105 (manufactured by Struers) at a ratio of 100:2 was poured into the columnar mold. Next, it was allowed to stand at room temperature (23°C) for 1 day or longer to be sufficiently solidified.

Procedure (iii): The solidified columnar sample was taken out from the mold, and using a polishing machine (APO-128, Automax Polisher EV, manufactured by Refine Tec Ltd.), the solidified columnar sample was polished such that the pellet length of the liquid crystal polyester resin pellet 1P was a length of 1/2 of the length thereof.

Procedure (iv): A suede cloth No. 52-308 (manufactured by Refine Tec Ltd.) was spread for the polishing machine, and the surface polished to a length of 1/2 was polished with water containing an alumina powder (Alumina Powder A, manufactured by Refine Tec Ltd.) until the surface was flat and polishing scratches disappeared.

Procedure (v): The surface, which was subjected to polishing until being flat and until polishing scratches disappeared, was imaged using a microscope (main body: VHX-8000, lens: VH-700R, manufactured by KEYENCE CORPORATION) at a magnification of 10 to 25 times.

Procedure (vi): The captured image was subjected to binarization processing with image processing software (WinRooF2018, manufactured by MITANI CORPORATION), the Feret's diameter was calculated using Feret II from the measurement tool, and the Feret horizontal was defined as the major axis D1 of the cross section of the resin pellet, and the Feret vertical was defined as the minor axis D2 of the cross section of the resin pellet.

Procedure (vii): Five pellets were subjected to the procedures (i) to (vi), and the average values therefrom were adopted as the values of the major axis D1 and the minor axis D2 of each of the resin pellets.

### (Producing of liquid crystal polyester resin (A))

### <Producing of LCP 1>

Into a reactor equipped with a stirrer, a torque meter, a nitrogen gas introduction tube, a thermometer, and a reflux condenser were charged 994.5 g (7.2 mol) of p-hydroxybenzoic acid, 446.9 g (2.4 mol) of 4,4'-dihydroxybiphenyl, 239.2 g (1.44 mol) of terephthalic acid, 159.5 g (0.96 mol) of isophthalic acid, and 1347.6 g (13.2 mol) of acetic anhydride, 0.2 g of 1-methylimidazole was added thereto, and the inside of the reactor was sufficiently replaced with nitrogen gas.

Then, the internal temperature of the reactor was increased from room temperature to 150°C over 30 minutes while carrying out stirring under a stream of nitrogen gas, and then the temperature was maintained at 150°C, and reflux was carried out for 1 hour.

Next, 0.9 g of 1-methylimidazole was added thereto, the temperature was increased from 150°C to 320°C for 2 hours and 50 minutes while distilling acetic acid as a byproduct and unreacted acetic anhydride, and a prepolymer was obtained at the time point when an increase in torque was recognized as a reaction termination.

The prepolymer obtained in this way was cooled to room temperature and pulverized with a coarse pulverizer to obtain a prepolymer powder. In a nitrogen atmosphere, the prepolymer powder was heated from room temperature to 220°C over 1 hour and then heated from 220°C to 240°C over 0.5 hours, and the temperature was held at 240°C for 10 hours to carry out a solid phase polymerization. After the solid phase polymerization, cooling was carried out to obtain a powdery liquid crystal polyester 1 (LCP 1).

The flow starting temperature of LCP 1 was 291 °C.

### <Producing of LCP 2>

6-hydroxy-2-naphthoic acid (1034.99 g, 5.5 moles), 2,6-naphthalenedicarboxylic acid (378.33 g, 1.75 moles), terephthalic acid (83.07 g, 0.5 moles), hydroquinone (272.52 g, 2.475 moles, an excess by 0.225 moles with respect to the total amount of 2,6-naphthalenedicarboxylic acid and terephthalic acid), acetic anhydride (1,226.87 g, 12 moles), and 1-methylimidazole (0.17 g) as a catalyst were placed in a reactor equipped with a stirrer, a torque meter, a nitrogen gas introduction tube, a thermometer, and a reflux condenser, and the gas in the reactor was replaced with nitrogen gas. Then, the internal temperature of the reactor was raised from room temperature to 140°C over 15 minutes while carrying out stirring under a stream of nitrogen gas, and refluxing was carried out at 140°C for 1 hour.

Next, while distilling acetic acid as a byproduct and unreacted acetic anhydride, the temperature was increased from 145°C to 310°C over 3.5 hours and held at 310°C for 3 hours, and then the resultant contents were extracted and cooled to room temperature. After pulverizing the obtained solid material to a particle diameter of approximately 0.1 mm to 1 mm using a pulverizer, a solid phase polymerization was carried out under a nitrogen atmosphere by raising the temperature from room temperature to 250°C over 1 hour, raising the temperature from 250°C to 310°C over 9 hours, and holding the temperature at 310°C for 5 hours.

After the solid phase polymerization, cooling was carried out to obtain a powdery liquid crystal polyester 2 (LCP 2).

The flow starting temperature of LCP 2 was 322°C.

### (Producing of resin pellet)

### (Example 1)

Using the producing apparatus having a form shown in FIG. 4, liquid crystal polyester resin pellets were obtained as follows. An extruder, model: GTS-40 (manufactured by PLABOR Research Laboratory of Plastics Technology Co., Ltd.), was used as an extruder. EBD-1500A (manufactured by IMEX Co., Ltd.) was used as a belt-type pick-up machine. A fan cutter FCMiniPlus-4TN (manufactured by Hoshi Plastics Co., Ltd.) was used as a pelletizer.

### · Step of obtaining resin structural body

First, the belt-type pick-up machine (the pick-up part 127) was operated at a pick-up speed of 10 m/min, whereby a fiber bundle was heated to 200°C to be dried in the pre-heating part 121 while being continuously unrolled from the fiber roving 10 at a pick-up speed of 10 m/min, where the fiber bundle was Carbon Fiber CF1 (manufactured by Zoltek Corporation, Zoltek (registered trade name) PX35 CONTINUOUS TOW, PAN-based carbon fiber (tensile elastic modulus: 242 GPa, tensile strength: 4,139 MPa, tensile elongation: 1.7%, number-average fiber diameter: 7 µm, number of fibers: 50,000)).

Separately, using the extruder 120, the LCP 1 obtained in <Producing of LCP 1> described above was heated to 340°C to be prepared in a melted state.

Next, while supplying the dried fiber bundle (carbon fibers) to the die (impregnation part 123) attached to a tip of the extruder 120, the LCP 1 (resin material M) in the melted state was charged from the extruder from the supply port 123a of the extruder 120. LCP 1 was melted in the die (impregnation part 123) at 340°C, 82 parts by mass of the Carbon Fiber CF1 was impregnated with 100 parts by mass of the LCP 1 to carry out shape forming with a shape forming nozzle at an outlet of the die (impregnation part 123), and the shape was adjusted with a shaping roll to obtain a resin structural body 13, in which the Carbon Fiber CF1 was arranged to be substantially parallel to the longitudinal direction of the liquid crystal polyester resin layer.

Thereafter, the strand-shaped resin structural body 13 in a state of being heated in the die (impregnation part 123) was cooled in the cooling part 125 to 150°C or lower.

### · Step of obtaining pellet

Next, the cooled strand-shaped resin structural body 13 was picked up by the belt-type pick-up machine (pick-up part 127), unrolled to the pelletizer (cutting part 129), and cut to a length of 12 mm in the longitudinal direction thereof to obtain liquid crystal polyester resin pellets of Example 1 which is shown as the resin pellets 15 in FIG. 4, in which the major axis D1 of the cross section of the resin pellets was 10 mm, the minor axis D2 thereof was 1.1 mm, and D1/D2 thereof was 9.1.

The length-weighted average fiber length of the Carbon Fiber CF1 in the liquid crystal polyester resin pellets of Example 1, which was measured by the method described in [Measurement of length-weighted average fiber length of fibrous filler (carbon fiber or glass fiber) in resin pellet] described above, was 12 mm which was the same as the pellet length of the liquid crystal polyester resin pellets of Example 1.

### (Comparative Example 1)

Liquid crystal polyester resin pellets of Comparative Example 1, in which the major axis D1 of the cross section of the resin pellets was 3.3 mm, the minor axis D2 thereof was 2.2 mm, and D1/D2 thereof was 1.5, were produced under the same conditions as those in Example 1, except that the shape forming nozzle in Example 1 was changed to a die head of <p3.0 mm and the distance between the shaping roll 109 and the resin structural body 13 was adjusted.

The length-weighted average fiber length of the Carbon Fiber CF1 in the liquid crystal polyester resin pellets of Comparative Example 1, which was measured by the method described in [Measurement of length-weighted average fiber length of fibrous filler (carbon fiber or glass fiber) in resin pellet] described above, was 12 mm which was the same as the pellet length of the liquid crystal polyester resin pellets of Comparative Example 1.

### (Example 2)

Liquid crystal polyester resin pellets of Example 2 were produced in the same manner as in Example 1, except that the cutting length in Example 1 was changed such that the cutting was carried out to a length of 35 mm in the longitudinal direction. The length-weighted average fiber length of the Carbon Fiber CF1 in the liquid crystal polyester resin pellets of Example 2, which was measured by the method described in [Measurement of length-weighted average fiber length of fibrous filler (carbon fiber or glass fiber) in resin pellet] described above, was 35 mm which was the same as the pellet length of the liquid crystal polyester resin pellets of Example 2.

### (Comparative Example 2)

Liquid crystal polyester resin pellets were produced in the same manner as in Comparative Example 1, except that the cutting length in Comparative Example 1 was changed such that the cutting was carried out to a length of 35 mm in the longitudinal direction.

The length-weighted average fiber length of the Carbon Fiber CF1 in the liquid crystal polyester resin pellets of Comparative Example 2, which was measured by the method described in [Measurement of length-weighted average fiber length of fibrous filler (carbon fiber or glass fiber) in resin pellet] described above, was 35 mm which was the same as the pellet length of the liquid crystal polyester resin pellets of Comparative Example 2.

### (Example 3)

Liquid crystal polyester resin pellets of Example 3, in which the major axis D1 of the cross section of the resin pellets was 9.0 mm, the minor axis D2 thereof was 2.2 mm, and D1/D2 thereof was 4.1, were obtained in the same manner as in Example 1, except that the 82 parts by mass of the Carbon Fiber CF1 with respect to 100 parts by mass of the LCP 1 in Example 1 was changed to 33 parts by mass of the Carbon Fiber CF1.

The length-weighted average fiber length of the Carbon Fiber CF1 in the liquid crystal polyester resin pellets of Example 3, which was measured by the method described in [Measurement of length-weighted average fiber length of fibrous filler (carbon fiber or glass fiber) in resin pellet] described above, was 12 mm which was the same as the pellet length of the liquid crystal polyester resin pellets of Example 3.

### (Comparative Example 3)

Liquid crystal polyester resin pellets of Comparative Example 3, in which the major axis D1 of the cross section of the resin pellets was 4.0 mm, the minor axis D2 thereof was 3.5 mm, and D1/D2 thereof was 1.1, were produced in the same manner as in Example 1, except that 82 parts by mass of the Carbon Fiber CF1 with respect to 100 parts by mass of the LCP 1 in Example 1 was changed to 33 parts by mass, the shape forming nozzle was changed to a die head of ϕ5.0 mm, and the distance between the shaping roll 109 and the resin structural body 13 was adjusted.

The length-weighted average fiber length of the Carbon Fiber CF1 in the liquid crystal polyester resin pellets of Comparative Example 3, which was measured by the method described in [Measurement of length-weighted average fiber length of fibrous filler (carbon fiber or glass fiber) in resin pellet] described above, was 12 mm which was the same as the pellet length of the liquid crystal polyester resin pellets of Comparative Example 3.

### (Example 4)

Liquid crystal polyester resin pellets of Example 4, in which the major axis D1 of the cross section of the resin pellets was 3.5 mm, the minor axis D2 thereof was 0.80 mm, and D1/D2 thereof was 4.4, were produced in the same manner as in Example 1, except that the Carbon fiber CF1 of Example 1 was changed to Carbon fiber CF2 (manufactured by Mitsubishi Chemical Corporation, PYROFIL (registered trade name) CF Tow, TR50S15L, PAN-based carbon fiber, tensile strength: 4,900 MPa, tensile elastic modulus: 235 GPa, tensile elongation: 2.1%, number-average fiber diameter: 7 µm, number of fibers: 15,000), 82 parts by mass of the Carbon Fiber CF1 with respect to 100 parts by mass of the LCP 1 was changed to 54 parts by mass of the Carbon Fiber CF2 with respect to 100 parts by mass of the LCP 2, and the cutting length was changed such that the cutting was carried out to a length of 5 mm in the longitudinal direction.

The length-weighted average fiber length of the Carbon Fiber CF2 in the liquid crystal polyester resin pellets of Example 4, which was measured by the method described in [Measurement of length-weighted average fiber length of fibrous filler (carbon fiber or glass fiber) in resin pellet] described above, was 5 mm which was the same as the pellet length of the liquid crystal polyester resin pellets of Example 4.

### (Comparative Example 4)

Liquid crystal polyester resin pellets of Comparative Example 4, in which the major axis D1 of the cross section of the resin pellets was 1.7 mm, the minor axis D2 thereof was 1.5 mm, and D1/D2 thereof was 1.1, were produced under the same conditions as those in Example 4, except that the shape forming nozzle in Example 4 was changed to a die head of <p2.0 mm and the distance between the shaping roll 109 and the resin structural body 13 was adjusted.

The length-weighted average fiber length of the Carbon Fiber CF2 in the liquid crystal polyester resin pellets of Comparative Example 4, which was measured by the method described in [Measurement of length-weighted average fiber length of fibrous filler (carbon fiber or glass fiber) in resin pellet] described above, was 5 mm which was the same as the pellet length of the liquid crystal polyester resin pellets of Comparative Example 4.

### (Example 5)

Liquid crystal polyester resin pellets of Example 5, in which the major axis D1 of the cross section of the resin pellets was 2.3 mm, the minor axis D2 thereof was 0.78 mm, and D1/D2 thereof was 2.9, were produced under the same conditions as those in Example 1, except that the LCP 1 in Example 1 was changed to LCP 2, the temperature of the melted state was changed to 360°C, the Carbon Fiber CF1 was changed to Carbon Fiber CF2, and 82 parts by mass of the Carbon Fiber CF1 with respect to 100 parts by mass of the LCP 1 was changed to 67 parts by mass of the Carbon Fiber CF2 with respect to 100 parts by mass of the LCP 2.

The length-weighted average fiber length of the Carbon Fiber CF2 in the liquid crystal polyester resin pellets of Example 5, which was measured by the method described in [Measurement of length-weighted average fiber length of fibrous filler (carbon fiber or glass fiber) in resin pellet] described above, was 12 mm which was the same as the pellet length of the liquid crystal polyester resin pellets of Example 5.

### (Comparative Example 5)

Liquid crystal polyester resin pellets of Comparative Example 5, in which the major axis D1 of the cross section of the resin pellets was 1.5 mm, the minor axis D2 thereof was 1.3 mm, and D1/D2 thereof was 1.2, were produced under the same conditions as those in Example 5, except that the shape forming nozzle in Example 5 was changed to a die head of <p1.5 mm and the distance between the shaping roll 109 and the resin structural body 13 was adjusted.

The length-weighted average fiber length of the Carbon Fiber CF2 in the liquid crystal polyester resin pellets of Comparative Example 5, which was measured by the method described in [Measurement of length-weighted average fiber length of fibrous filler (carbon fiber or glass fiber) in resin pellet] described above, was 12 mm which was the same as the pellet length of the liquid crystal polyester resin pellets of Comparative Example 5.

### (Example 6)

Liquid crystal polyester resin pellets of Example 6, in which the major axis D1 of the cross section of the resin pellets was 4.6 mm, the minor axis D2 thereof was 0.56 mm, and D1/D2 thereof was 8.2, were produced under the same conditions as those in Example 1, except that the Carbon fiber CF1 of Example 1 was changed to Carbon fiber CF3 (manufactured by Mitsubishi Chemical Corporation, PYROFIL (registered trade name) CF Tow, HS40 12P, PAN-based carbon fiber (tensile elastic modulus: 425 GPa), tensile strength: 4,160 MPa, tensile elongation: 1.1%, number-average fiber diameter: 5 µm, number of fibers: 24,000), and 82 parts by mass of the Carbon Fiber CF1 with respect to 100 parts by mass of the LCP 1 was changed to 54 parts by mass of the Carbon Fiber CF3 with respect to 100 parts by mass of the LCP 1.

The length-weighted average fiber length of the Carbon Fiber CF3 in the liquid crystal polyester resin pellets of Example 6, which was measured by the method described in [Measurement of length-weighted average fiber length of fibrous filler (carbon fiber or glass fiber) in resin pellet] described above, was 12 mm which was the same as the pellet length of the liquid crystal polyester resin pellets of Example 6.

### (Comparative Example 6)

Liquid crystal polyester resin pellets of Comparative Example 6, in which the major axis D1 of the cross section of the resin pellets was 1.8 mm, the minor axis D2 thereof was 1.2 mm, and D1/D2 thereof was 1.5, were produced under the same conditions as those in Example 6, except that the shape forming nozzle in Example 6 was changed to a die head of ϕ1.5 mm and the distance between the shaping roll 109 and the resin structural body 13 was adjusted.

The length-weighted average fiber length of the Carbon Fiber CF3 in the liquid crystal polyester resin pellets of Comparative Example 6, which was measured by the method described in [Measurement of length-weighted average fiber length of fibrous filler (carbon fiber or glass fiber) in resin pellet] described above, was 12 mm which was the same as the pellet length of the liquid crystal polyester resin pellets of Comparative Example 6.

### (Example 7)

Liquid crystal polyester resin pellets of Example 7, in which the major axis D1 of the cross section of the resin pellets was 5.2 mm, the minor axis D2 thereof was 0.45 mm, and D1/D2 thereof was 12, were produced under the same conditions as those in Example 1, except that the Carbon Fiber CF1 of Example 1 was changed to Glass Fiber GF1 (manufactured by Nitto Boseki Co., Ltd., RS110QL483AC, E-glass, number-average fiber diameter: 17 µm, number of fibers: 3,000), and 82 parts by mass of the Carbon Fiber CF1 with respect to 100 parts by mass of the LCP 1 was changed to 67 parts by mass of the Glass Fiber GF1 with respect to 100 parts by mass of the LCP 1.

The length-weighted average fiber length of the Glass Fiber GF1 in the liquid crystal polyester resin pellets of Example 7, which was measured by the method described in [Measurement of length-weighted average fiber length of fibrous filler (carbon fiber or glass fiber) in resin pellet] described above, was 12 mm which was the same as the pellet length of the liquid crystal polyester resin pellets of Example 7.

### (Comparative Example 7)

Liquid crystal polyester resin pellets of Comparative Example 7, in which the major axis D1 of the cross section of the pellets was 1.5 mm, the minor axis D2 thereof was 1.3 mm, and D1/D2 thereof was 1.2, were produced under the same conditions as those in Example 7, except that the shape forming nozzle in Example 7 was changed to a die head of ϕ1.5 mm and the distance between the shaping roll 109 and the resin structural body 13 was adjusted.

The length-weighted average fiber length of the Glass Fiber GF1 in the liquid crystal polyester resin pellets of Comparative Example 7, which was measured by the method described in [Measurement of length-weighted average fiber length of fibrous filler (carbon fiber or glass fiber) in resin pellet] described above, was 12 mm which was the same as the pellet length of the liquid crystal polyester resin pellets of Comparative Example 7.

### (Comparative Example 8)

Powdery LCP 1 was granulated to be pellet-shaped by a twin-screw extruder PCM-30 (manufactured by Ikegai Corp.). Next, the pellet-shaped LCP 1 was supplied to a single-screw extruder (screw diameter: 50 mm) to be melted and then extruded from a T-die (lip length: 300 mm, lip clearance: 1 mm, die temperature: 350°C) into a film shape to be cooled, thereby obtaining a resin film having a width of 520 mm and a thickness of 25 µm.

Next, the resin films were supplied one by one to both surfaces of the Carbon Fiber CF1 to be superposed and continuously fed to a heating furnace, the resin film was subjected to heat melting at 340°C, and the Carbon Fiber CF1 was impregnated with LCP 1 to obtain a resin tape. Further, the resin tape was unrolled to a pelletizer (a fan cutter FCMiniPlus-4TN (manufactured by Hoshi Plastics Co., Ltd.)), and the unrolled resin tape was cut to a length of 12 mm in the longitudinal direction to obtain liquid crystal polyester resin pellets of Example 8, in which the major axis D1 of the cross section of the resin pellets was 25 mm, the minor axis D2 thereof was 0.23 mm, and D1/D2 thereof was 109.

The length-weighted average fiber length of the Carbon Fiber CF1 in the liquid crystal polyester resin pellets of Comparative Example 8, which was measured by the method described in [Measurement of length-weighted average fiber length of fibrous filler (carbon fiber or glass fiber) in resin pellet] described above, was 12 mm which was the same as the pellet length of the liquid crystal polyester resin pellets of Comparative Example 8.

### (Comparative Example 9)

Liquid crystal polyester resin pellets of Comparative Example 9 were produced in the same manner as in Comparative Example 8, except that the cutting length in Comparative Example 8 was a length of 35 mm in the longitudinal direction.

The length-weighted average fiber length of the Carbon Fiber CF1 in the liquid crystal polyester resin pellets of Comparative Example 9, which was measured by the method described in [Measurement of length-weighted average fiber length of fibrous filler (carbon fiber or glass fiber) in resin pellet] described above, was 35 mm which was the same as the pellet length of the liquid crystal polyester resin pellets of Comparative Example 9.

### (Comparative Example 10)

Liquid crystal polyester resin pellets of Comparative Example 10 were produced in the same manner as in Example 1, except that the cutting length in Example 1 was changed such that the cutting was carried out to a length of 50 mm in the longitudinal direction.

The length-weighted average fiber length of the Carbon Fiber CF1 in the liquid crystal polyester resin pellets of Comparative Example 10, which was measured by the method described in [Measurement of length-weighted average fiber length of fibrous filler (carbon fiber or glass fiber) in resin pellet] described above, was 50 mm which was the same as the pellet length of the liquid crystal polyester resin pellets of Comparative Example 10.

### (Comparative Example 11)

A change was made to a step of the cutting length in Example 4 was a length of 4 mm or less in the longitudinal direction, and an attempt was made to produce liquid crystal polyester resin pellets of Comparative Example 11, in which the pellet length and the length-weighted average fiber length of the Carbon Fiber CF1 was 4 mm. However, the cutting could not be carried out properly, and thus the liquid crystal polyester resin pellets of Comparative Example 11 could not be produced.

### (Comparative Example 12)

Polypropylene resin pellets of Comparative Example 12, in which the major axis D1 of the cross section of the resin pellets was 7.6 mm, the minor axis D2 thereof was 2.5 mm, and D1/D2 thereof was 3.0, were produced under the same conditions as those in Example 1, except that the LCP 1 in Example 1 was changed to PP1 (SUMITOMONOBLEN (registered trade name) U501E1, manufactured by Sumitomo Chemical Co., Ltd.), the temperature of the melted state was changed to 250°C, and the Carbon Fiber CF1 was changed to 67 parts by mass with respect to 100 parts by mass of the PP1.

The length-weighted average fiber length of the Carbon Fiber CF1 in the polypropylene resin pellets of Comparative Example 12, which was measured by the method described in [Measurement of length-weighted average fiber length of fibrous filler (carbon fiber or glass fiber) in resin pellet] described above, was 12 mm which was the same as the pellet length of the polypropylene resin pellets of Comparative Example 12.

### (Comparative Example 13)

Polypropylene resin pellets of Comparative Example 13, in which the major axis D1 of the cross section of the resin pellets was 3.5 mm, the minor axis D2 thereof was 3.3 mm, and D1/D2 thereof was 1.1, were produced under the same conditions as those in Comparative Example 12, except that the shape forming nozzle in Comparative Example 12 was changed to a die head of <p3.0 mm and the distance between the shaping roll 109 and the resin structural body 13 was adjusted.

The length-weighted average fiber length of the Carbon Fiber CF1 in the polypropylene resin pellets of Comparative Example 13, which was measured by the method described in [Measurement of length-weighted average fiber length of fibrous filler (carbon fiber or glass fiber) in resin pellet] described above, was 12 mm which was the same as the pellet length of the polypropylene resin pellets of Comparative Example 13.

### (Comparative Example 14)

Polypropylene resin pellets of Comparative Example 14, in which the major axis D1 of the cross section of the resin pellets was 4.4 mm, the minor axis D2 thereof was 0.92 mm, and D1/D2 thereof was 4.7, were produced under the same conditions as those in Comparative Example 12, except that the Carbon Fiber CF1 in Comparative Example 12 was changed to the Carbon Fiber CF2.

The length-weighted average fiber length of the Carbon Fiber CF1 in the polypropylene resin pellets of Comparative Example 14, which was measured by the method described in [Measurement of length-weighted average fiber length of fibrous filler (carbon fiber or glass fiber) in resin pellet] described above, was 12 mm which was the same as the pellet length of the polypropylene resin pellets of Comparative Example 14.

### (Comparative Example 15)

Polypropylene resin pellets of Comparative Example 15, in which the major axis D1 of the cross section of the resin pellets was 2.5 mm, the minor axis D2 thereof was 2.3 mm, and D1/D2 thereof was 1.1, were produced under the same conditions as those in Comparative Example 14, except that the shape forming nozzle in Comparative Example 14 was changed to a die head of ϕ2.0 mm and the distance between the shaping roll 109 and the resin structural body 13 was adjusted.

The length-weighted average fiber length of the Carbon Fiber CF1 in the polypropylene resin pellets of Comparative Example 15, which was measured by the method described in [Measurement of length-weighted average fiber length of fibrous filler (carbon fiber or glass fiber) in resin pellet] described above, was 12 mm which was the same as the pellet length of the polypropylene resin pellets of Comparative Example 15.

### (Producing 1 of injection-molded article)

### (Example 1)

The liquid crystal polyester resin pellets of Example 1 were charged into a hopper of an injection molding machine TR450EH3 (manufactured by Sodick Co., Ltd.) and injected into a mold having a mold temperature of 100°C at an injection speed of 200 mm/s in the injection molding machine having a cylinder temperature of 360°C to produce a flat plate-shaped molded article of Example 1, which had a size of 150 mm × 150 mm × thickness 4 mm.

The gate was a film gate having a thickness of 4 mm from one side of the flat plate-shaped molded article of Example 1.

Other injection conditions are as follows.

### <<Injection conditions>>

Screw rotation speed (plasticizing part): 100 rpm, back pressure: 0 MPa, holding pressure: 100 MPa, and holding pressure time: 5 seconds.

### (Comparative Example 1)

A flat plate-shaped molded article of Comparative Example 1 was produced under the same conditions as those in Example 1, except that the liquid crystal polyester resin pellets of Example 1 were changed to the liquid crystal polyester resin pellets of Comparative Example 1.

### (Example 2)

A flat plate-shaped molded article of Example 2 was produced under the same conditions as those in Example 1, except that the liquid crystal polyester resin pellets of Example 1 were changed to the liquid crystal polyester resin pellets of Example 2.

### (Comparative Example 2)

An attempt was made to produce a flat plate-shaped molded article of Comparative Example 2 under the same conditions as those in Example 1, except that the liquid crystal polyester resin pellets of Example 1 were changed to the liquid crystal polyester resin pellets of Comparative Example 2. However, the liquid crystal polyester resin pellets of Comparative Example 2 were clogged under the hopper, and thus the flat plate-shaped molded article of Comparative Example 2 could not be produced.

### (Example 3)

A flat plate-shaped molded article of Example 3 was produced under the same conditions as those in Example 1, except that the liquid crystal polyester resin pellets of Example 1 were changed to the liquid crystal polyester resin pellets of Example 3.

### (Comparative Example 3)

A flat plate-shaped molded article of Comparative Example 3 was produced under the same conditions as those in Example 1, except that the liquid crystal polyester resin pellets of Example 1 were changed to the liquid crystal polyester resin pellets of Comparative Example 3.

### (Example 4)

A flat plate-shaped molded article of Example 4 was produced under the same conditions as those in Example 1, except that the liquid crystal polyester resin pellets of Example 1 were changed to the liquid crystal polyester resin pellets of Example 4.

### (Comparative Example 4)

A flat plate-shaped molded article of Comparative Example 4 was produced under the same conditions as those in Example 1, except that the liquid crystal polyester resin pellets of Example 1 were changed to the liquid crystal polyester resin pellets of Comparative Example 4.

### (Example 5)

A flat plate-shaped molded article of Example 5 was produced under the same conditions as those in Example 1, except that the liquid crystal polyester resin pellets of Example 1 were changed to the liquid crystal polyester resin pellets of Example 5, and the cylinder temperature in Example 1 was changed from 360°C to 380°C.

### (Comparative Example 5)

A flat plate-shaped molded article of Comparative Example 5 was produced under the same conditions as those in Example 5, except that the liquid crystal polyester resin pellets of Example 5 were changed to the liquid crystal polyester resin pellets of Comparative Example 5.

### (Example 6)

A flat plate-shaped molded article of Example 6 was produced under the same conditions as those in Example 1, except that the liquid crystal polyester resin pellets of Example 1 were changed to the liquid crystal polyester resin pellets of Example 6.

### (Comparative Example 6)

A flat plate-shaped molded article of Comparative Example 6 was produced under the same conditions as those in Example 1, except that the liquid crystal polyester resin pellets of Example 1 were changed to the liquid crystal polyester resin pellets of Comparative Example 6.

### (Example 7)

A flat plate-shaped molded article of Example 7 was produced under the same conditions as those in Example 1, except that the liquid crystal polyester resin pellets of Example 1 were changed to the liquid crystal polyester resin pellets of Example 7.

### (Comparative Example 7)

A flat plate-shaped molded article of Comparative Example 7 was produced under the same conditions as those in Example 1, except that the liquid crystal polyester resin pellets of Example 1 were changed to the liquid crystal polyester resin pellets of Comparative Example 7.

### (Comparative Example 8)

An attempt was made to produce a flat plate-shaped molded article of Comparative Example 8 under the same conditions as those in Example 1, except that the liquid crystal polyester resin pellets of Example 1 were changed to the liquid crystal polyester resin pellets of Comparative Example 8. However, the liquid crystal polyester resin pellets of Comparative Example 8 were entangled with the screw in the injection molding machine and could not be plasticized, and thus the flat plate-shaped molded article of Comparative Example 8 could not be produced.

### (Comparative Example 9)

An attempt was made to produce a flat plate-shaped molded article of Comparative Example 9 under the same conditions as those in Example 1, except that the liquid crystal polyester resin pellets of Example 1 were changed to the liquid crystal polyester resin pellets of Comparative Example 9. However, for the same reason as in Comparative Example 8, the flat plate-shaped molded article of Comparative Example 9 could not be produced.

### (Comparative Example 10)

An attempt was made to produce a flat plate-shaped molded article of Comparative Example 10 under the same conditions as those in Example 1, except that the liquid crystal polyester resin pellets of Example 1 were changed to the liquid crystal polyester resin pellets of Comparative Example 10. However, the liquid crystal polyester resin pellets of Comparative Example 10 were clogged under the hopper, and thus the flat plate-shaped molded article of Comparative Example 10 could not be produced.

### (Comparative Example 12)

A flat plate-shaped molded article of Comparative Example 12 was produced under the same conditions as those in Example 1, except that the liquid crystal polyester resin pellets of Example 1 were changed to the polypropylene resin pellets of Comparative Example 12, the cylinder temperature in Example 1 was changed from 360°C to 240°C, and the mold temperature was changed from 100°C to 80°C.

### (Comparative Example 13)

A flat plate-shaped molded article of Comparative Example 13 was produced under the same conditions as those in Comparative Example 12, except that the polypropylene resin pellets of Comparative Example 12 were changed to the polypropylene resin pellets of Comparative Example 13.

### (Comparative Example 14)

A flat plate-shaped molded article of Comparative Example 14 was produced under the same conditions as those in Comparative Example 12, except that the polypropylene resin pellets of Comparative Example 12 were changed to the polypropylene resin pellets of Comparative Example 14.

### (Comparative Example 15)

A flat plate-shaped molded article of Comparative Example 15 was produced under the same conditions as those in Comparative Example 12, except that the polypropylene resin pellets of Comparative Example 12 were changed to the polypropylene resin pellets of Comparative Example 15.

### [Measurement of bending elastic modulus and bending strength of molded article (injection-molded article) in MD direction]

### · Production of test piece for evaluation of molded article in MD direction

A 120 mm × 120 mm portion of the central part of the flat plate-shaped molded article of each example was used and cut to have a shape having a width of 10 mm, a length of 80 mm, and a thickness of 4 mm so that the length direction was MD to obtain each of ten plate-shaped test pieces (test pieces for evaluation in the MD direction) from one flat plate-shaped molded article.

Numbers from 1 to 10 were assigned to the test pieces for evaluation in the MD direction, in order from the test piece closest to the left side surface of the flat plate-shaped molded article when the gate was faced upward.

### · Evaluation of bending elastic modulus and bending strength in MD direction for test piece for evaluation in MD direction

Using the five plate-shaped test pieces to which odd numbers had been assigned in the obtained test pieces for evaluation in the MD direction, the bending elastic modulus and the bending strength were measured five times in accordance with ISO 178. The average values of the obtained measurement values were adopted as the bending elastic modulus and the bending strength of the molded article. The results are shown in Tables 1 to 3.

### [Bending elastic modulus and bending strength of molded article (injection-molded article) in TD direction]

### · Production of test piece for evaluation of molded article in TD direction

A 120 mm × 120 mm portion of the central part of the flat plate-shaped molded article of each example was used and cut to have a shape having a width of 10 mm, a length of 80 mm, and a thickness of 4 mm so that the length direction was TD to obtain each of ten plate-shaped test pieces (test pieces for evaluation in the TD direction) from one flat plate-shaped molded article. Numbers from 1 to 10 were assigned in order from the test piece closest to the gate of the flat plate-shaped molded article.

### · Evaluation of bending elastic modulus and bending strength in TD direction for test piece for evaluation in TD direction

Using the five plate-shaped test pieces to which odd numbers had been assigned in the obtained test pieces for evaluation in the TD direction, the bending elastic modulus and the bending strength were measured five times in accordance with ISO 178. The average values of the obtained measurement values were adopted as the bending elastic modulus and the bending strength of the molded article. The results are shown in Tables 1 to 3.

Further, the ratio of the value of the MD bending elastic modulus obtained to the TD bending elastic modulus obtained was taken to determine the bending elastic modulus ratio (MD/TD). In addition, the ratio of the value of the MD bending strength to the TD bending strength was taken to determine the bending strength ratio (MD/TD). The results are shown in Tables 1 to 3.

### (Producing of press-molded article)

### (Example 1)

A metal frame, which had internal dimensions of 250 mm × 250 mm × thickness 4 mm and external dimensions of 300 mm × 300 mm × thickness 4 mm, was prepared and loaded on a metal plate 1 having a size of 300 mm × 300 mm × thickness 2 mm. An amount of a predetermined weight (400 g) of the liquid crystal polyester resin pellets of Example 1 was prepared, and the inner frame of the metal plate was filled with the liquid crystal polyester resin pellets of Example 1.

Thereafter, a metal plate 2 having a size of 249.5 mm × 249.5 mm × thickness 4 mm was loaded on the top to match the inner frame of the metal frame, and a metal plate 3 having a size of 300 mm × 300 mm × thickness 2 mm was further loaded on the metal plate 2 to produce a mold.

The produced mold was placed in a press machine (high-temperature vacuum press KVHCII-PRESS, d by Kitagawa Seiki Co., Ltd.) and pressed for 5 minutes at a hot plate temperature of 340°C, a pressurization pressure of 2.0 MPa, and a vacuum degree of 2.0 kPa. Thereafter, a press-molded article of Example 1, having a size of 250 mm × 250 mm × thickness 4 mm, was produced by being cooled to room temperature and taken out from the mold.

### (Comparative Example 1)

A press-molded article of Comparative Example 1 was produced under the same conditions as those in Example 1, except that the liquid crystal polyester resin pellets of Example 1 were changed to the liquid crystal polyester resin pellets of Comparative Example 1.

### (Example 2)

A press-molded article of Example 2 was produced under the same conditions as those in Example 1, except that the liquid crystal polyester resin pellets of Example 1 were changed to the liquid crystal polyester resin pellets of Example 2.

### (Example 3)

A press-molded article of Example 3 was produced under the same conditions as those in Example 1, except that the liquid crystal polyester resin pellets of Example 1 were changed to the liquid crystal polyester resin pellets of Example 3, and the amount of the liquid crystal polyester resin pellets was changed from 400 g to 350 g.

### (Comparative Example 3)

A press-molded article of Comparative Example 3 was produced under the same conditions as those in Example 3, except that the liquid crystal polyester resin pellets of Example 3 were changed to the liquid crystal polyester resin pellets of Comparative Example 3.

### (Example 4)

A press-molded article of Example 4 was produced under the same conditions as those in Example 1, except that the liquid crystal polyester resin pellets of Example 1 were changed to the liquid crystal polyester resin pellets of Example 4, and the amount of the liquid crystal polyester resin pellets was changed from 400 g to 375 g.

### (Comparative Example 4)

A press-molded article of Comparative Example 4 was produced under the same conditions as those in Example 4, except that the liquid crystal polyester resin pellets of Example 4 were changed to the liquid crystal polyester resin pellets of Comparative Example 4.

### (Example 5)

A press-molded article of Example 5 was produced under the same conditions as those in Example 1, except that the liquid crystal polyester resin pellets of Example 1 were changed to the liquid crystal polyester resin pellets of Example 5, the amount of the liquid crystal polyester resin pellets was changed from 400 g to 375 g, and the hot plate temperature was changed from 340°C to 360°C.

### (Comparative Example 5)

A press-molded article of Comparative Example 5 was produced under the same conditions as those in Example 5, except that the liquid crystal polyester resin pellets of Example 5 were changed to the liquid crystal polyester resin pellets of Comparative

### Example 5.

### (Example 6)

A press-molded article of Example 6 was produced under the same conditions as those in Example 1, except that the liquid crystal polyester resin pellets of Example 1 were changed to the liquid crystal polyester resin pellets of Example 6, and the amount of the liquid crystal polyester resin pellets was changed from 400 g to 370 g.

### (Comparative Example 6)

A press-molded article of Comparative Example 6 was produced under the same conditions as those in Example 6, except that the liquid crystal polyester resin pellets of Example 6 were changed to the liquid crystal polyester resin pellets of Comparative Example 6.

### (Example 7)

A press-molded article of Example 7 was produced under the same conditions as those in Example 1, except that the liquid crystal polyester resin pellets of Example 7 were changed to the liquid crystal polyester resin pellets of Example 7, and the amount of the liquid crystal polyester resin pellets was changed from 400 g to 450 g.

### (Comparative Example 7)

A press-molded article of Comparative Example 7 was produced under the same conditions as those in Example 7, except that the liquid crystal polyester resin pellets of Example 7 were changed to the liquid crystal polyester resin pellets of Comparative Example 7.

### (Comparative Example 12)

A press-molded article of Comparative Example 12 was produced under the same conditions as those in Example 1, except that the liquid crystal polyester resin pellets of Example 1 were changed to the polypropylene resin pellets of Comparative Example 12, the cylinder temperature was changed from 360°C to 240°C, and the amount of the resin pellets was changed from 400 g to 260 g.

### (Comparative Example 13)

A press-molded article of Comparative Example 12 was produced under the same conditions as those in Comparative Example 12, except that the polypropylene resin pellets of Comparative Example 12 were changed to the polypropylene resin pellets of Comparative Example 13.

### (Comparative Example 14)

A press-molded article of Comparative Example 12 was produced under the same conditions as those in Comparative Example 14, except that the polypropylene resin pellets of Comparative Example 12 were changed to the polypropylene resin pellets of Comparative Example 14.

### (Comparative Example 15)

A press-molded article of Comparative Example 12 was produced under the same conditions as those in Comparative Example 15, except that the polypropylene resin pellets of Comparative Example 12 were changed to the polypropylene resin pellets of Comparative Example 15.

### [Measurement of bending elastic modulus and bending strength of press-molded article]

### · Production of plate-shaped test piece

A 120 mm × 120 mm portion of the central part of the press-molded article of each example was used and cut to have a shape having a width of 10 mm, a length of 80 mm, and a thickness of 4 mm to obtain ten plate-shaped test pieces from one press-molded article.

Numbers from 1 to 10 were assigned to the plate-shaped test pieces in order from the end side of the press-molded article.

### · Evaluation of bending elastic modulus and bending strength of plate-shaped test piece

Using the five plate-shaped test pieces to which odd numbers had been assigned in the obtained plate-shaped test pieces, the bending elastic modulus and the bending strength were measured five times in accordance with ISO 178. The average values of the obtained measurement values were adopted as the bending elastic modulus and the bending strength of the plate-shaped test piece. The results are shown in Tables 1 to 3.

In addition, standard deviations were determined from the measured values of the bending elastic modulus and the bending strength of the plate-shaped test piece, and the standard deviations were divided by the values of the above-described average values to calculate coefficient of variation CV values (a bending elastic modulus CV value and a bending strength CV value). The results are shown in Tables 1 to 3.

### [Measurement of length-weighted average fiber length of fibrous filler (carbon fiber or glass fiber) in injection-molded article or press-molded article]

Procedure (1): For the flat plate-shaped molded article of each example, which was an injection-molded article, a test piece having a width of 20 mm, a length of 20 mm, and a thickness of 4 mm was cut out from the central part of the flat plate-shaped molded article (150 mm × 150 mm × thickness 4 mm) of each example.

In a case of the press-molded article (250 mm × 250 mm × thickness 4 mm) as well, a test piece having a width of 20 mm, a length of 20 mm, and a thickness of 4 mm was cut out from the central part.

Next, the test piece containing carbon fibers was heated at 500°C for 3 hours in a muffle furnace, and the test piece containing glass fibers was heated at 600°C for 4 hours to remove the resin content.

Procedure (2): The resin content was removed from the test piece to obtain only the fibrous filler, which was subsequently dispersed in 1,000 mL of an aqueous solution containing 0.05% by volume of a surfactant (Micro 90, manufactured by INTERNATIONAL PRODUCTS CORPORATION) to prepare a fibrous filler dispersion liquid.

Procedure (3): A part of the fibrous filler dispersion liquid was extracted and diluted to 10 times with pure water. 50 mL was extracted from the dispersion liquid after dilution and dispersed in a petri dish. Subsequently, the fibrous filler (B) dispersed in the petri dish was observed with a microscope (main body: VHX-8000, lens: VH-Z00R, manufactured by KEYENCE CORPORATION, magnification: 10 times), and five images per sample were captured such that the imaged regions did not overlap. However, when the fibrous filler was carbon fibers, 50 mL was extracted from the dispersion liquid after dilution and then filtered under reduced pressure using a Φ90 mm Kiriyama funnel filter paper (No. 5C), and images of the carbon fibers dispersed on the filter paper were captured.

Procedure (4): The fiber lengths of all of the five captured images were measured using image processing software (WinROOF2018, manufactured by MITANI CORPORATION) as follows.

### <<Method of measuring fiber length>>

(a) The captured images were subjected to the monochrome pixel conversion processing.
(b) Binarization processing was carried out so as to color only the imaged fibers.
(c) The fiber length was measured using the needle shape separation function of the image processing software.
(d) The fiber length of the fiber that could not be subjected to the binarization in (c) or the fiber length of the curved fiber was measured according to the multi-point measurement, and the fiber in contact with the edge of the image was not subjected to the measurement. However, in (c) and (d), fibers of 20 µm or less were determined to be noise and not included in the number n of fibers measured. In the procedure (4), in a case the number n of fibers measured did not exceed 500, the procedure returned to the procedure (3), additional images were captured, and the measurement was carried out until n exceeded 500.

Procedure (5): From the fiber lengths of the fibrous fillers in the five images, the length-weighted average fiber length lm = (Σli² × ni)/(Σli × ni) was determined (Σni > 500).
li: Fiber length of fibrous filler
ni: Number of fibrous fillers having fiber length li
The results are shown in Tables 1 to 3.

**[Table 1]**

| | | | Example 1 | Comparative Example 1 | Example 2 | Comparative Example 2 | Example 3 | Comparative Example 3 |
|---|---|---|---|---|---|---|---|---|
| Composition of resin pellet | LCP 1 | Part by mass | 100 | 100 | 100 | 100 | 100 | 100 |
| | Carbon Fiber CF1 | Part by mass | 82 | 82 | 82 | 82 | 33 | 33 |
| Physical properties of resin pellet | Pellet length | mm | 12 | 12 | 35 | 35 | 12 | 12 |
| | Length-weighted average fiber length of fibrous filler | mm | 12 | 12 | 35 | 35 | 12 | 12 |
| | Major axis D1 | mm | 10 | 3.3 | 1.0 | 3.3 | 9.0 | 4.0 |
| | Minor axis D2 | mm | 1.1 | 2.2 | 1.1 | 2.2 | 2.2 | 3.5 |
| | D1/D2 | | 9.1 | 1.5 | 9.1 | 1.5 | 4.1 | 1.1 |
| Physical properties of injection-molded article | Length-weighted average fiber length of fibrous filler | mm | 1.4 | 0.75 | 2.1 | - | 3.8 | 3.1 |
| | MD bending elastic modulus | GPa | 24 | 26 | 22 | | 16 | 17 |
| | TD bending elastic modulus | GPa | 15 | 9.0 | 16 | | 10 | 7.2 |
| | Bending elastic modulus MD/TD | | 1.6 | 2.9 | 1.4 | | 1.6 | 2.4 |
| | MD bending strength | MPa | 172 | 210 | 179 | | 155 | 175 |
| | TD bending strength | MPa | 158 | 105 | 155 | | 122 | 85 |
| | Bending strength MD/TD | | 1.1 | 2.0 | 1.2 | | 1.3 | 2.1 |
| Physical properties of press-molded article | Length-weighted average fiber length of fibrous filler | mm | 12 | 12 | 35 | | 12 | 12 |
| | Bending elastic modulus | GPa | 11 | 8.7 | 12 | | 6.3 | 5.2 |
| | Bending elastic modulus CV value | × 100 | 13 | 39 | 18 | | 11 | 35 |
| | Bending strength | MPa | 125 | 75 | 145 | | 98 | 55 |
| | Bending strength CV value | × 100 | 32 | 49 | 41 | | 40 | 54 |

**[Table 2]**

| | | | Example 4 | Comparative Example 4 | Example 5 | Comparative Example 5 | Example 6 | Comparative Example 6 | Example 7 | Comparative Example 7 |
|---|---|---|---|---|---|---|---|---|---|---|
| Composition of resin pellet | LCP1 | Part by mass | 100 | 100 | - | - | 100 | 100 | 100 | 100 |
| | LCP2 | Part by mass | - | - | 100 | 100 | - | - | - | - |
| | Carbon Fiber CF2 | Part by mass | 54 | 54 | 67 | 67 | - | - | - | - |
| | Carbon fiber CF3 | Part by mass | - | - | - | - | 54 | 54 | - | - |
| | Glass Fiber GF1 | Pan by mass | - | - | - | - | - | - | 67 | 67 |
| Physical properties of resin pellet | Pellet length | mm | 5 | 5 | 12 | 12 | 12 | 12 | 12 | 12 |
| | Length-weighted average fiber length of fibrous filler | mm | 5 | 5 | 12 | 12 | 12 | 12 | 12 | 12 |
| | Major axis D1 | mm | 3.5 | 1.7 | 2.3 | 1.5 | 4.6 | 1.8 | 5.2 | 1.5 |
| | Minor axis D2 | mm | 0.80 | 1.5 | 0.78 | 1.3 | 0.56 | 1.2 | 0.45 | 1.3 |
| | D1/D2 | | 4.4 | 1.1 | 2.9 | 1.2 | 8.2 | 1.5 | 12 | 1.2 |
| Physical properties of injection-molded article | Length-weighted average fiber length of fibrous filler | mm | 1.5 | 1.0 | 1.1 | 0.75 | 3.4 | 1.5 | 4.7 | 2.9 |
| | MD bending elastic modulus | GPa | 20 | 23 | 21 | 26 | 32 | 31 | 11 | 9.4 |
| | TD bending elastic modulus | GPa | 11 | 6.9 | 11 | 5.0 | 17 | 13 | 6.8 | 4.8 |
| | Bending elastic modulus MD/TD | | 1.8 | 3.3 | 1.9 | 5.2 | 1.9 | 2.4 | 1.6 | 2.0 |
| | MD bending strength | MPa | 165 | 186 | 213 | 234 | 238 | 267 | 128 | 165 |
| | TD bending strength | MPa | 131 | 91 | 111 | 88 | 173 | 138 | 111 | 77 |
| | Bending strength MD/TD | | 1.3 | 2.0 | 1.9 | 2.7 | 1.4 | 1.9 | 1.2 | 2.1 |
| Physical properties of press-molded article | Length-weighted average fiber length of fibrous filler | mm | 5 | 5 | 12 | 12 | 12 | 12 | 12 | 12 |
| | Bending elastic modulus | GPa | 8.3 | 6.5 | 16 | 14 | 15 | 9.1 | 5.5 | 4.7 |
| | Bending elastic modulus CV value | × 100 | 21 | 44 | 22 | 45 | 19 | 33 | 27 | 49 |
| | Bending strength | MPa | 113 | 66 | 155 | 135 | 155 | 97 | 88 | 47 |
| | Bending strength CV value | × 100 | 33 | 47 | 31 | 46 | 25 | 41 | 31 | 50 |

**[Table 3]**

| | | | Comparative Example 8 | Comparative Example 9 | Comparative Example 10 | Comparative Example 11 | Comparative Example 12 | Comparative Example 13 | Comparative Example 14 | Comparative Example 15 |
|---|---|---|---|---|---|---|---|---|---|---|
| | LCP1 | | 100 | 100 | 100 | 100 | | | | |
| | PP1 | | - | - | - | - | 100 | 100 | 100 | 100 |
| Composition of resin pellet | Carbon Fibet CF1 | | 82 | 82 | 82 | - | 67 | 67 | - | - |
| | Carbon Fiber CF2 | | - | - | - | 82 | - | - | 67 | 67 |
| | Pellet length | mm | 12 | 35 | 50 | < 4 | 12 | 12 | 12 | 12 |
| Physical properties of resin pellet | Length-weighted average fiber length of fibrous filler | mm | 12 | 35 | 50 | | 12 | 12 | 12 | 12 |
| | Major axis D1 | mm | 25 | 25 | 10 | | 7.6 | 3.5 | 4.4 | 2.5 |
| | Minor axis D2 | mm | 0.23 | 0.23 | 1.1 | | 2.5 | 3.3 | 0.92 | 2.3 |
| | D1/D2 | | 109 | 109 | 9.1 | | 3.0 | 1.1 | 4.7 | 1.1 |
| | Leogth- weighted average fiber length of fibrous filler | mm | | | | | 1.1 | 1.1 | 0.51 | 0.66 |
| | MD bending elastic modulus | GPa | | | | | 14 | 14 | 12 | 12 |
| Physical properties of injection-molded article | TD bending elastic modulus | GPa | | | | | 6.2 | 6.0 | 5.9 | 6.1 |
| | Bending elastic modulus MD/TD | | | | | - | 2.3 | 2.3 | 2.0 | 2.0 |
| | MD bending strength | MPa | | | | | 97 | 101 | 100 | 105 |
| | TO bending strength | MPa | | | | | 45 | 51 | 67 | 61 |
| | Bending strength MD/TD | | - | - | - | | 2.2 | 2.0 | 1.5 | 1.7 |
| | Length-weighted average fiber length of fibrous filler | mm | | | | | 12 | 12 | 12 | 12 |
| Physical properties of press-molded article | Bending elastic modulus | GPa | | | | | 8.7 | 6.5 | 7.7 | 5.8 |
| | Bending elastic modulus CV value | × 100 | | | | | 11 | 20 | 10 | 19 |
| | Bending strength | MPa | | | | | 98 | 78 | 101 | 88 |
| | Bending strength CV value | × 100 | | | | | 20 | 33 | 22 | 40 |

As shown in Tables 1 and 2, it has been confirmed that in the injection-molded articles produced by using the liquid crystal polyester resin pellets of Examples 1 to 7, the bending elastic modulus ratio (MD/TD) and the bending strength ratio (MD/TD) are closer to 1, and the anisotropy of the mechanical strength is improved as compared with the injection-molded articles produced by using the liquid crystal polyester resin pellets of Comparative Examples 1 to 7.

In addition, it has been confirmed that in the press-molded articles produced by using the liquid crystal polyester resin pellets of Examples 1 to 7, the values of the bending elastic modulus CV value and the bending strength CV value are small, and the variations in physical properties are smaller as compared with the press-molded articles produced by using the liquid crystal polyester resin pellets of Comparative Examples 1 to 7.

As a result, it has been confirmed that according to the liquid crystal polyester resin pellets of Examples, it is possible to produce a molded article having small variations in physical properties in a case of being used for any of injection molding or press molding, and thus the selectivity of the processing method at the producing site is improved.

In addition, it has been confirmed that among the liquid crystal polyester resin pellets of Examples, in the injection-molded articles produced by using the liquid crystal polyester resin pellets of Examples 1 to 3 containing Carbon Fiber CF1 in which the number of fibers of the fibrous filler is relatively large, the bending elastic modulus ratio (MD/TD) and the bending strength ratio (MD/TD) are closer to 1, and in the press-molded articles produced by using the liquid crystal polyester resin pellets of Examples 1 to 3, the values of the bending elastic modulus CV value and the bending strength CV value are smaller. The results were favorable even when the amount of the fibrous filler was small as in the case of the liquid crystal polyester resin pellets of Example 3.

As a result, it has been confirmed that according to the liquid crystal polyester resin pellets of Examples 1 to 3, it is possible to produce a molded article having smaller variations in physical properties in a case of being used for any of injection molding or press molding, and thus the selectivity of the processing method at the producing site is further improved.

As shown in Table 3, the liquid crystal polyester resin pellets of Comparative Examples 8 and 9 did not make it possible to produce an injection-molded article. This is due to because in the liquid crystal polyester resin pellets of Comparative Examples 8 and 9, D1/D2 is more than 100, and the shape of the liquid crystal polyester resin pellet is too thin, and thus the resin pellets have been entangled with the screw in the injection molding machine and cannot be plasticized.

In addition, the liquid crystal polyester resin pellets of Comparative Example 10 did not make it possible to produce an injection-molded article, either. This is due to because the length-weighted average fiber length of the fibrous filler in the liquid crystal polyester resin pellets of Comparative Example 10 is too long, and thus the fibrous filler has bridged under the hopper of the injection molding machine.

From the comparison between the molded article produced by using the polypropylene resin pellets of Comparative Example 12 and the molded article produced by using the polypropylene resin pellets of Comparative Example 13, and, the comparison between the molded article produced by using the polypropylene resin pellets of Comparative Example 14 and the molded article produced by using the polypropylene resin pellets of Comparative Example 15, it has been confirmed that when polypropylene resins are used instead of the liquid crystal polyester resin, the molded article produced by using the resin pellets cannot make it possible to improve the bending elastic modulus ratio (MD/TD), the bending strength ratio (MD/TD), the bending elastic modulus CV value, and the bending strength CV value even in a case of resin pellets in which the length-weighted average fiber length of the fibrous filler is 5 mm or more and less than 50 mm, the pellet length of the resin pellet and the length-weighted average fiber length of the fibrous filler are the same lengths, and D1/D2 is in a range of 2.0 or more and 100 or less.

As a result, instead of the same tendency when the resin is crystalline, it has been confirmed that the effect of the present invention is exhibited for the first time by satisfying the above-described configuration when a liquid crystal polyester resin having a structure in which molecules are more regularly arranged is used.

### (Producing 2 of injection-molded article)

### (Example 6')

The liquid crystal polyester resin pellets of Example 6 were charged into an injection molding machine TR450EH3 (manufactured by Sodick Co., Ltd.) having a molding temperature of 360°C and injected into a mold having a mold temperature of 100°C at an injection speed of 20 mm/s, a screw rotation speed of 100 rpm, a holding pressure of 100 MPa, and a back pressure of 0 MPa to produce a multipurpose test piece (type A1) of Example 6' in accordance with JIS K 7139.

### <Density test>

A test piece having a width of 10 mm, a thickness of 4 mm, and a length of 80 mm was cut out from the multipurpose test piece of Example 6'. The density of this test piece was measured in accordance with JIS K 7112 (Plastics - Methods for measuring the density and specific gravity of non-cellular plastics) and ISO 1183. An automatic specific gravity measuring apparatus (ASG-320K, manufactured by Kanto Measure Co., Ltd.) was used for the measurement. The results are listed in Table 4.

### <Tensile test>

In accordance with JIS K 7161 (Plastics - Test method for tensile properties) and ISO527, the tensile strength (MPa) and the nominal tensile strain at break (%) were measured for the multipurpose test piece of Example 6' at a test speed of 5 mm/min in an atmosphere of 23°C and 50% humidity. A TENSILON universal material testing instrument (RTG-1310 manufactured by A&D Company, Limited) was used for the measurement. Five samples were subjected to the measurement, and the average value thereof was determined. The results are listed in Table 4.

### <Bending test>

In accordance with JIS K 7171 (Plastics - Determination of flexural properties) and ISO178, a test piece having a width of 10 mm, a thickness of 4 mm, and a length of 80 mm was cut out from the multipurpose test piece of Example 6'. Using a TENSILON universal material tester (manufactured by A&D Company, Limited., RTG-1310), the test piece was subjected to a three-point bending test 5 times at a test speed of 2 mm/min. a distance between points of 64 mm, and an indenter radius of 5 mm, and the bending strength and the bending elastic modulus were obtained from the average value therefrom. The results are listed in Table 4.

### <Charpy impact test>

A test piece having a width of 10 mm, a thickness of 4 mm, and a length of 80 mm was cut out from the multipurpose test piece of Example 6'. This test piece was subjected to notch processing with a notch angle of 45° and a depth of 2 mm in accordance with ISO 2818 and JIS K 7144. A notching tool (model: A-4, manufactured by Toyo Seiki Seisaku-sho, Ltd.) was used for the notch processing. Using this test piece having a notch, a Charpy impact test with a notch was carried out by employing a hammer 4.0J in accordance with ISO 179-1 and JIS K 7111-1 (Plastics - Determination of Charpy impact properties). The average value from the five measurements was adopted as the Charpy impact strength. A pendulum type impact tester (CEAST9050, manufactured by INSTR ON) was used for the measurement. The results are listed in Table 4.

### <Test of temperature of deflection under load>

A test piece having a width of 10 mm, a thickness of 4 mm, and a length of 80 mm was cut out from the multipurpose test piece of Example 6'. This test piece was subjected to the determination of the temperature of deflection under load at 1.80 MPa in accordance with JIS K 7191 (Plastics - Determination of temperature of deflection under load) and ISO75. The average value from the five measurements was adopted as the temperature of deflection under load. A No. 148-HD500 heat distortion tester (manufactured by YASUDA SEIKI SEISAKUSHO, LTD.) was used for the measurement. The results are listed in Table 4.

**[Table 4]**

| | Example 6' |
|---|---|
| Density [g/cm³] | 1.52 |
| Tensile strength [MPa] | 201 |
| Nominal tensile strain at break [%] | 2.4 |
| Bending strength [MPa] | 363 |
| Bending elastic modulus [GPa] | 46 |
| Charpy impact strength [kJ/m²] | 39 |
| Temperature of deflection under load [°C] | 289 |

It has been confirmed that because all the values of the tensile strength, the nominal tensile strain at break, the bending strength, the bending elastic modulus, the Charpy impact strength, and the temperature of deflection under load are high in the multipurpose test piece of Example 6' as shown in Table 4, it is possible to produce a molded article having high mechanical strength in a case of using the liquid crystal polyester resin pellets of Example 6.

The preferred Examples of the present invention have been described as above; however, the present invention is not limited to these Examples. Additions, omissions, substitutions, and other modifications of the configuration can be made without departing from the object of the present invention. The present invention is not limited by the description described above but is limited only by the scope of the attached Claims.

### [Reference Signs List]

1P: Liquid crystal polyester resin pellet
1: End surface
2: Outer circumferential surface
L: Pellet length
1': Cross section
D1: Major axis
D2: Minor axis
100: Producing apparatus
101 to 108: Transport rolls
109: Shaping roll
120: Extruder
121: Pre-heating part
123: Impregnation part
125: Cooling part
127: Pick-up part
129: Cutting part
200: Tire wheel disk
201: Disk part
202: Rim attachment part
203: Hub hole
204: Hub attachment part
205: Spoke

## Claims

1. A liquid crystal polyester resin pellet comprising:
a liquid crystal polyester resin (A); and
a fibrous filler (B),
wherein a length-weighted average fiber length of the fibrous filler (B) is 5 mm or more and less than 50 mm,
a pellet length of the liquid crystal polyester resin pellet and the length-weighted average fiber length of the fibrous filler (B) are substantially the same, and
a ratio DI/D2 of a major axis D1 to a minor axis D2 of a cross section of the liquid crystal polyester resin pellet is 2.0 or more and 100 or less.

2. The liquid crystal polyester resin pellet according to Claim 1,
wherein the major axis D1 is 4.1 mm or more and 24 mm or less.

3. The liquid crystal polyester resin pellet according to Claim 1 or 2,
wherein the minor axis D2 is 0.25 mm or more and 1.4 mm or less.

4. The liquid crystal polyester resin pellet according to any one of Claims 1 to 3,
wherein the fibrous filler (B) includes a carbon fiber or a glass fiber.

5. The liquid crystal polyester resin pellet according to any one of Claims 1 to 4,
wherein the number of fibers of the fibrous filler (B) is 3,000 or more and 60,000 or less.

6. A molded article produced by using the liquid crystal polyester resin pellet according to any one of Claims 1 to 5.

7. The molded article according to Claim 6,
wherein a length-weighted average fiber length of the fibrous filler (B) in the molded article is 1 mm or more and less than 50 mm.
